# EUROPÄISCHE PATENTANMELDUNG

(11) **EP 4 742 199 A1**
(43) Veröffentlichungstag der Anmeldung: **13.05.2026**
(21) Anmeldenummer: 25213180.0
(22) Anmeldetag: 04.11.2025
(51) Int. Cl.: G07B 15/02, G07B 15/04, G08G 1/017, G08G 1/14

(54) **DATENVERARBEITUNGSVORRICHTUNG FÜR EIN PARKSYSTEM**

(30) Priorität: 08.11.2024 DE 102024132714
(71) Anmelder: Scheidt & Bachmann GmbH, 41238 Mönchengladbach (DE)
(72) Erfinder: Miller, Dr. Norbert, 41063 Mönchengladbach (DE)
(74) Vertreter: Cohausz & Florack

(57) **Zusammenfassung**

Die Erfindung betrifft eine Datenverarbeitungsvorrichtung für ein Parksystem, umfassend: mindestens ein Empfangsmodul, eingerichtet zum Empfangen eines Einfahrtdatensatzes, enthaltend eine durch eine erste Kennzeichenbestimmungseinrichtung bestimmte Einfahrts-Kennzeichenkette eines in eine Parkvorrichtung des Parksystems einfahrenden Fahrzeugs und mindestens ein durch eine Einfahrtssignalerfassungseinrichtung in einem Einfahrtsbereich der Parkvorrichtung während des Einfahrens des Fahrzeugs erfasstes Einfahrtrohsignal, mindestens ein Speichermodul, eingerichtet zum Speichern des empfangenen Einfahrtdatensatzes in einem Datenspeicher, wobei das Empfangsmodul eingerichtet ist zum Empfangen eines Ausfahrtdatensatzes, enthaltend eine durch eine zweite Kennzeichenbestimmungseinrichtung bestimmte Ausfahrt-Kennzeichenkette eines aus der Parkvorrichtung ausfahrenden Fahrzeugs und mindestens ein durch eine Ausfahrtssignalerfassungseinrichtung in einem Ausfahrtsbereich der Parkvorrichtung während des Ausfahrens des Fahrzeugs erfasstes Ausfahrtrohsignal, und mindestens ein Auswertemodul, eingerichtet zum Feststellen eines zu dem empfangenen Ausfahrtdatensatz korrespondierenden Einfahrtdatensatzes aus den gespeicherten Einfahrtdatensätzen durch Durchführen eines ersten und ggf. eines zweiten Vergleichsschritts.

## Beschreibung

Die Erfindung betrifft eine Datenverarbeitungsvorrichtung für ein (Off-Street-) Parksystem. Darüber hinaus betrifft die Erfindung ein (Off-Street-) Parksystem und ein Verfahren.

Parksysteme mit mindestens einer Parkvorrichtung sind aus dem Stand der Technik bekannt. Eine Parkvorrichtung ist insbesondere ein Parkhaus oder ein Parkplatz. Derartige Parksysteme werden auch als Off-Street-Parking-Systeme bzw. -Anlagen bezeichnet.

Ein derartiges Parksystem verfügt in der Regel über eine oder mehrere Zufahrtsvorrichtung/en an einer entsprechenden Anzahl an Durchfahrten zu und/oder von einer Parkvorrichtung. Beispielsweise kann eine Zufahrtsvorrichtung mit einem Sperrmittel vorgesehen sein, wie eine Schranke mit einem schwenkbaren Schrankenbaum. Mit einer derartigen Zufahrtsvorrichtung wird insbesondere ein Durchfahren durch ein Fahrzeug einer Durchfahrt, an der die Zufahrtsvorrichtung angeordnet ist, von einem ersten Bereich in einen weiteren Bereich kontrolliert bzw. gesteuert.

So kann bei einem Parksystem mindestens eine Zufahrtsvorrichtung vorgesehen sein, um ein Durchfahren eines Fahrzeugs von einem nicht kontrollierten Bereich, beispielsweise einer (öffentlichen) Straße, in einen kontrollierten Bereich, beispielsweise den Parkbereich bzw. die Parkvorrichtung, zu steuern. Mit anderen Worten kann das Einfahren in die Parkvorrichtung durch eine Zufahrtsvorrichtung an einer Einfahrt des Parksystems gesteuert werden. Alternativ oder zusätzlich kann bei einem Parksystem mindestens eine Zufahrtsvorrichtung vorgesehen sein, um ein Durchfahren eines Fahrzeugs von dem kontrollierten Bereich in den nicht kontrollierten Bereich zu steuern. Mit anderen Worten kann ein Ausfahren eines Fahrzeugs an einer Ausfahrt aus der Parkvorrichtung durch eine Zufahrtsvorrichtung gesteuert werden.

An einer Ein- und/ oder Ausfahrt kann eine Zufahrtsvorrichtung mit Sperrelement oder eine Zufahrtsvorrichtung ohne Sperrelement (auch als Free-flow-Anlage bzw. Free-flow Zufahrtsvorrichtung bezeichnet) angeordnet sein. Ein- und/ oder Ausfahrt können baulich getrennt sein, beispielsweise mit getrennten Fahrspuren für Ein- und Ausfahrt und jeweils getrennten Zufahrtsvorrichtung, oder kombiniert sein, beispielweise mit einer Ein- und Ausfahrt mit einer gemeinsamen Fahrspur und mit einer gemeinsamen Zufahrtsvorrichtung. Ferner können bei Ein- und/ oder Ausfahrt mehrere Fahrspuren in einer Richtung nebeneinander liegen, insbesondere mit und ohne bauliche Trennung der Fahrspuren.

Bei bekannten Zufahrtsvorrichtungen wird das Einfahren in eine Parkvorrichtung nach dem Erstellen eines Parktickets, wie eines Kurzparkertickets, aufgrund einer Nutzeraktion gewährt. Das Kurzparkerticket, insbesondere ein Papierticket, wird dann am Ende einer Parkzeit bzw. Parkdauer von einem Benutzer an einem Automaten bezahlt und an der Ausfahrt durch eine Validatorvorrichtung der Zufahrtsvorrichtung überprüft. Bei einer positiven Prüfung wird ein Durchfahren der Durchfahrt (in diesem Fall die Ausfahrt) durch ein Freigabemodul freigegeben. Stellt die Validatorvorrichtung jedoch fest, dass das Ticket beispielsweise noch nicht bezahlt wurde oder dass die Zahlung zu lange zurückliegt, so bleibt die Zufahrtsvorrichtung geschlossen, die Durchfahrt gesperrt. Mit anderen Worten, ein Durchfahren der Durchfahrt wird durch ein Freigabemodul blockiert.

Ein stetiges Anliegen bei (Off-Street-) Parksystemen ist es, den Nutzerkomfort zu verbessern. Insbesondere werden die manuellen Nutzeraktionen als nutzerunfreundlich angesehen. Aus dem Stand der Technik sind hierzu bereits Parksysteme bekannt, bei denen die erforderlichen Nutzeraktionen reduziert werden können.

So sind Parksysteme bekannt, bei denen an einer Durchfahrt (insbesondere an jeder Durchfahrt jeweils) eine Kennzeichenbestimmungseinrichtung vorgesehen ist, (jeweils) umfassend mindestens eine Kamera. Die mindestens eine Kamera einer Kennzeichenbestimmungseinrichtung ist eingerichtet zum Erfassen von Bilddaten eines Fahrzeugkennzeichens eines durch die entsprechende Durchfahrt durchgefahrenen bzw. fahrenden Fahrzeugs. Dies umfasst insbesondere das Erfassen der genannten Bilddaten vor einem Durchfahren der Durchfahrt.

Die Kennzeichenbestimmungseinrichtung kann die Kamera und ein mit der Kamera verbundenes Bildauswertemodul umfassen. Das Bildauswertemodul kann eingerichtet sein zum Bestimmen einer Kennzeichenkette aus den erfassten Bilddaten. Ein solche Kennzeichenbestimmungseinrichtung (mit Kamera und Bildauswertemodul) wird auch als LPR (License Plate Recognition) Kennzeichenbestimmungseinrichtung bezeichnet. Bei einer LPR-Kennzeichenbestimmungseinrichtung wird das mittels der Kamera erfasste Bild des Fahrzeugkennzeichens durch das Bildauswertemodul insbesondere mittels OCR (Optical Character Recognition) ausgewertet, um die Kennzeichenkette zu ermitteln.

Die Kennzeichenkette stellt dabei eine Zeichenfolge dar, welche die Kennzeichenbestimmungseinrichtung aus dem Kamerabild bzw. den Bilddaten der Kamera ermittelt und welche im Idealfall diejenige Zeichenfolge ist, die der Kennzeichenkette auf dem Kennzeichenschild entspricht, das am Fahrzeug angebracht und auf den erfassten Bilddaten abgebildet ist.

Insbesondere kann neben den Bilddaten durch die jeweilige Kennzeichenbestimmungseinrichtung auch der Durchfahrtzeitpunkt (insbesondere ein Einfahrtszeitpunkt oder ein Ausfahrtszeitpunkt) bestimmt werden. Eine Datenverarbeitungsvorrichtung kann eingerichtet sein zum Auswerten der genannten Daten. Beispielsweise kann die Datenverarbeitungsvorrichtung eingerichtet sein zum Bestimmen der Parkdauer aus der Differenz von Ein- und Ausfahrzeitpunkt für dieselbe Kennzeichenkette bzw. dasselbe Fahrzeug. Zudem können, beispielsweise in einem Datenspeicher einer Datenverarbeitungsvorrichtung, Zufahrtsberechtigungen (z.B. Dauerparker-Berechtigungen) mit einem Fahrzeugkennzeichen verknüpft sein.

Wenn die Datenverarbeitungsvorrichtung ferner feststellt, dass für einen Kurzparker die Bezahlung der Parkgebühr vor der Ausfahrt, z.B. an einem Kassenautomaten, erfolgt ist, kann das Fahrzeugkennzeichen genutzt werden, um bei dem Bezahlvorgang den Parkvorgang zu identifizieren, der bezahlt werden soll.

Auch wenn Parksysteme mit LPR- Kennzeichenbestimmungseinrichtung vorteilhaft sind, indem sie die Nutzeraktionen reduzieren und somit den Nutzerkomfort verbessern können, weisen die aus dem Stand der Technik bekannten Systeme Nachteile hinsichtlich der Zuverlässigkeit auf. Bekannte dedizierte License-Plate-Recognition Kamerasysteme erreichen (insbesondere trotz hoher Systempreise) nur eine Genauigkeit bei dem Bestimmen des Fahrzeugkennzeichens in einem Bereich von 95-99%, also insbesondere in Hinblick auf das korrekte Auslesen des Fahrzeugkennzeichens aus den erfassten Bilddaten, wie einer Bildsequenz, an der Ein- oder Ausfahrt einer Parkvorrichtung.

Ein fehlerhaft bestimmtes Fahrzeugkennzeichen wird insbesondere dann durch die Datenverarbeitungsvorrichtung festgestellt werden, wenn die an einer Ausfahrt bestimmte Ausfahrt-Kennzeichenkette nicht mit den Einfahrt-Kennzeichenketten identisch ist, die an der mindestens einen Einfahrt der Parkvorrichtung bestimmt wurden. Dann kann ein Parkvorgang nicht in eindeutiger Weise einem Fahrzeug zugeordnet werden, insbesondere kann kein abgeschlossener Parkvorgang, der aus der Parkdauer jeweils genau eines Fahrzeugs besteht, gebildet und abgerechnet werden.

Bei einer hohen Anzahl von Parkvorgängen führt selbst eine 99%-Quote noch zu einer entsprechend hohen Anzahl von Problemparkvorgängen, die die Nutzer direkt betreffen und für Unzufriedenheit sorgen. Dies führt insbesondere zu einem reduzierten Nutzerkomfort und einen hohen Betreuungsaufwand des Parkhausbetreibers. Zum Vergleich: Ein Magnetstreifen- oder Barcode-Ticket, das bei einem Einfahrtvorgang durch eine Zufahrtsvorrichtung ausgegeben wird, wird mit einer Quote von besser als 99,9% in einem Bezahlautomaten und an der Ausfahrt korrekt gelesen.

Aus der US 11 488 471 B2 ist ein Parksystem mit einer Vielzahl von Erfassungsvorrichtungen bekannt, jeweils umfassend Kamera (mit Bildauswertemodul) und Detektor. An einer Einfahrt des Parksystem ist eine erste, derartige Erfassungsvorrichtung vorgesehen, um das Fahrzeugkennzeichen des einfahrenden Fahrzeugs zu bestimmen. Gleichzeitig werden durch den Detektor der Erfassungsvorrichtung Signale von drahtlosen Endgeräten erfasst sowie die jeweiligen Kennungen der drahtlosen Endgeräte bestimmt, die als Dateninhalt in einem Signal enthalten sind. Hierzu muss der Detektor unter anderem einen Decoder umfassen, um den Dateninhalt zu bestimmen. Ferner ist der Detektor eingerichtet, aus dem bestimmten Dateninhalt die gesuchte Kennung zu extrahieren.

Sodann wird ein Datensatz erzeugt, enthaltend das bestimmte Fahrzeugkennzeichen und die dabei erfassten Kennungen der drahtlosen Endgeräte. Eine Vielzahl weiterer Erfassungsvorrichtungen sind hierbei in der Parkvorrichtung der US 11 488 471 B2 verteilt angeordnet. Gelangt ein Fahrzeug in den Erfassungsbereich einer solchen Vorrichtung, werden gleichzeitig das Fahrzeugkennzeichen und die im Erfassungsbereich befindlichen Kennungen erfasst sowie jeweils ein entsprechender Datensatz erzeugt. Aus der Vielzahl von erzeugten Datensätzen mit demselben Fahrzeugkennzeichen wird die am häufigsten vorhandene Kennung bestimmt und als Identifizierungsalternative zu dem Fahrzeugkennzeichen ermittelt.

Die US 11 488 471 B2 ermöglicht damit zwar, ein Fahrzeug alternativ zu dem Fahrzeugkennzeichen anhand einer Kennung eines drahtlosen Endgeräts zu identifizieren. Jedoch führt dies auch zu keiner ausreichenden Zuverlässigkeit: So kann beispielsweise kein drahtloses Endgerät, also ein Handy, in dem Fahrzeug vorhanden sein oder eine Mehrzahl von drahtlosen Endgeräten in dem Fahrzeug, so dass eine eindeutige Zuordnung nicht erfolgen kann. Zudem ist der Implementierungsaufwand immens, da einerseits der Detektor zwingend in der Lage sein muss, die Signale zu decodieren und aus dem decodierten Dateninhalt die gesuchte Kennung zu extrahieren. Andererseits sind entsprechende Erfassungsvorrichtungen nicht nur an der Einfahrt der Parkvorrichtung anzuordnen, sondern auch verteilt im gesamten Bereich der Parkvorrichtung. Insbesondere müssen drei oder mehr Datensätze generiert werden.

Somit liegt der Erfindung die Aufgabe zugrunde, eine Möglichkeit zu schaffen, mit der die Nachteile des Stands der Technik zumindest reduziert werden und insbesondere mit einem geringen Aufwand und einer erhöhten Zuverlässigkeit ein Ausfahrtdatensatz mit einer bestimmten Ausfahrt-Kennzeichenkette dem korrekten Einfahrtdatensatz mit einer bestimmten Einfahrt-Kennzeichenkette zugeordnet werden kann, auch wenn die jeweils bestimmten Zeichenketten aufgrund eines Kennzeichenbestimmungsfehlers nicht identisch sind.

Die Aufgabe wird gemäß einem ersten Aspekt der Erfindung gelöst durch eine Datenverarbeitungsvorrichtung nach Anspruch 1 für ein Parksystem. Die Datenverarbeitungsvorrichtung umfasst mindestens ein Empfangsmodul. Das Empfangsmodul ist eingerichtet zum Empfangen eines Einfahrtdatensatzes, insbesondere einer Vielzahl von Einfahrtdatensätzen. Ein Einfahrtdatensatz (insbesondere jeder Einfahrtdatensatz) enthält eine durch eine erste Kennzeichenbestimmungseinrichtung bestimmte Einfahrts-Kennzeichenkette eines in eine Parkvorrichtung des Parksystems einfahrenden Fahrzeugs und mindestens ein durch eine Einfahrtssignalerfassungseinrichtung in einem Einfahrtsbereich der Parkvorrichtung während des Einfahrens des Fahrzeugs erfasstes Einfahrtrohsignal. Die Datenverarbeitungsvorrichtung umfasst mindestens ein Speichermodul. Das Speichermodul ist eingerichtet zum Speichern des empfangenen Einfahrtdatensatzes in einem Datenspeicher, insbesondere zum Speichern von sämtlichen empfangenen Einfahrtdatensätzen in dem Datenspeicher. Das Empfangsmodul ist eingerichtet zum Empfangen eines Ausfahrtdatensatzes, insbesondere einer Vielzahl von Ausfahrtdatensätzen. Ein Ausfahrtdatensatz (insbesondere jeder Ausfahrtdatensatz) enthält eine durch eine zweite Kennzeichenbestimmungseinrichtung bestimmte Ausfahrtskennzeichenkette eines aus der Parkvorrichtung ausfahrenden Fahrzeugs und mindestens ein durch eine Ausfahrtssignalerfassungseinrichtung in einem Ausfahrtsbereich der Parkvorrichtung während des Ausfahrens des Fahrzeugs erfasstes Ausfahrtrohsignal. Die Datenverarbeitungsvorrichtung umfasst mindestens ein Auswertemodul. Das Auswertemodul ist eingerichtet zum Feststellen eines zu dem empfangenen Ausfahrtdatensatz korrespondierenden Einfahrtdatensatz aus den (bzw. sämtlichen) gespeicherten Einfahrtdatensätzen durch:
- Vergleichen, in einem ersten Vergleichsschritt, der Ausfahrt-Kennzeichenkette des Ausfahrtdatensatzes mit den jeweiligen Einfahrt-Kennzeichenketten der gespeicherten Einfahrtdatensätze, und
- Vergleichen, in einem zweiten Vergleichsschritt, (nur) des mindestens einen Ausfahrtrohsignal des Ausfahrtdatensatzes mit dem Einfahrtrohsignal des mindestens einen Einfahrtdatensatzes der gespeicherten Einfahrtdatensätze, welcher diejenige Einfahrt-Kennzeichenkette enthält, die der Ausfahrt-Kennzeichenkette des Ausfahrtdatensatzes am ähnlichsten ist, zumindest dann, wenn in dem ersten Vergleichsschritt keine zur Ausfahrt-Kennzeichenkette identische Einfahrt-Kennzeichenkette ermittelt wurde.

### Ein weiterer Aspekt der Erfindung ist ein Parksystem nach Anspruch 12. Das Parksystem umfasst mindestens eine zuvor beschriebene

Datenverarbeitungsvorrichtung (nach Anspruch 1). Das Parksystem umfasst mindestens eine erste Kennzeichenbestimmungseinrichtung. Die erste Kennzeichenbestimmungseinrichtung ist eingerichtet zum Bestimmen einer Einfahrt-Kennzeichenkette eines in eine Parkvorrichtung einfahrenden Fahrzeugs. Das Parksystem umfasst mindestens eine Einfahrtssignalerfassungseinrichtung. Die Einfahrtssignalerfassungseinrichtung ist eingerichtet zum Erfassen mindestens eines Einfahrtrohsignals in einem Einfahrtsbereich der Parkvorrichtung während des Einfahrens des Fahrzeugs. Das Parksystem umfasst mindestens eine zweite Kennzeichenbestimmungseinrichtung. Die zweite Kennzeichenbestimmungseinrichtung ist eingerichtet zum Bestimmen einer Ausfahrt-Kennzeichenkette eines aus der Parkvorrichtung ausfahrenden Fahrzeugs. Das Parksystem umfasst mindestens eine Ausfahrtssignalerfassungseinrichtung. Die Ausfahrtssignalerfassungseinrichtung ist eingerichtet zum Erfassen mindestens eines Ausfahrtrohsignals in einem Ausfahrtsbereich der Parkvorrichtung während des Ausfahrens des Fahrzeugs.

Ein Einfahrt- bzw. Ausfahrtrohsignal (gemeinsam "Rohsignal") im Sinne der Erfindung ist wenigstens ein von der Einfahrts-bzw. Ausfahrtssignalerfassungseinrichtung in einem Einfahrts- bzw. Ausfahrtsbereich der Parkvorrichtung während des Ein- bzw. Ausfahrens des Fahrzeugs erfasstes und verarbeitetes, jedoch informatorisch uninterpretiertes Signal, insbesondere Funksignal. Bei dem empfangenen und verarbeiteten Signal kann es sich beispielsweise um ein Bluetooth Advertisement Signal handeln. Dieses Signal wird von einer Signalerfassungseinrichtung, beispielsweise von einer Antenne, empfangen und verarbeitet, sodass der Signalinhalt (als Rohsignal) zur Verfügung steht. Bei Bluetooth umfasst dieser Signalinhalt beispielsweise einen sogenannten Header und eine sogenannte Payload. Dies ist im Sinne der Erfindung ein Rohsignal, denn um die mit dem Signalinhalt übermittelte Information zu verstehen, ist Wissen über den Aufbau des Signals notwendig. Beispielsweise muss bekannt sein, dass das Rohsignal die Adresse (ID) des aussendenden Gerätes beinhaltet und an welcher Stelle des Rohsignals diese zu finden ist. Gleiches gilt für weitere Informationen. Ist der Aufbau des Rohsignals unbekannt, ist eine informatorische Interpretation nicht möglich. So ist es denkbar, dass neben Bluetooth andere Signale empfangen werden, die keinem einheitlichen und/oder bekannten Aufbau entsprechen. Ein Beispiel hierfür sind Signale von Reifendrucksensoren, deren Aufbau von Hersteller zu Hersteller unterschiedlich sein kann. Für die vorliegende Erfindung ist eine informatorische Interpretation der Signale jedoch nicht notwendig und erfolgt insbesondere nicht, sodass als Rohsignale auch die Signalinhalte von solchen Signalen genutzt werden können, deren Aufbau unbekannt ist. Das erfasste wenigstens eine Signal stammt dabei von wenigstens einer Sendevorrichtung (insbesondere von einer Mehrzahl von Sendevorrichtungen), von der erwartet werden kann, dass sie in oder an einem Fahrzeug vorhanden ist bzw. mitgeführt wird.

Indem im Gegensatz zum Stand der Technik beim Einfahren und Ausfahren zusätzlich zu der Kennzeichenkette des Fahrzeugs Rohsignale von Sendequellen, die sich im Bereich des Fahrzeugs während des Einfahrens und Ausfahrens befinden, erfasst und zumindest dann ausgewertet werden, wenn bei einem ersten Vergleich einer während des Ausfahrens erfassten Ausfahrt-Kennzeichenkette mit den Einfahrt-Kennzeichenketten der gespeicherten Einfahrtdatensätzen keine Identität festgestellt werden kann, werden die Nachteile des Stands der Technik zumindest reduziert. Insbesondere kann mit einem geringen Aufwand und einer erhöhten Zuverlässigkeit ein Ausfahrtdatensatz mit einer bestimmten Ausfahrt-Kennzeichenkette dem korrekten Einfahrtdatensatz mit einer bestimmten Einfahrt-Kennzeichenkette zugeordnet werden, auch wenn die jeweils bestimmten Fahrzeugkennzeichenketten aufgrund eines Kennzeichenbestimmungsfehlers nicht identisch sind. Ein Einfahrtdatensatz ist insbesondere dann ein korrekter Einfahrtdatensatz, wenn der Ausfahrtdatensatz von demselben Fahrzeug stammt wie der genannte Einfahrtdatensatz. So wird ermöglicht, dass mit einem geringen Aufwand bei einem Feststellen einer fehlerhaft bestimmten Kennzeichenkette eine Korrespondenz zweier (Einfahrt- und Ausfahrt-)Kennzeichenketten ausreichend sicher feststellbar ist.

Insbesondere ist es das Ziel der Erfindung, einen Einfahrtdatensatz und einen Ausfahrtdatensatz demselben Fahrzeug zuzuordnen, welches die Generierung der genannten Datensätze bewirkt hat, um beispielsweise die Parkdauer des genannten Fahrzeugs zu bestimmen. Erfindungsgemäß ist insbesondere erkannt worden, dass sich die Rohsignale, die von in oder an einem ersten Fahrzeug angeordneten Sende- bzw. Signalquellen ausgesendet werden, während des Einfahrens und während des Ausfahrens ähneln bzw. zumindest überwiegend übereinstimmen. Ferner unterscheiden sich diese Rohsignale insbesondere regelmäßig von den Rohsignalen, die von in oder an einem zweiten Fahrzeug angeordneten Signalquellen ausgesendet werden. Insbesondere kann sich die Anzahl an Sendequellen (z.B. Anzahl von mobilen Endgeräten in einem Fahrzeug (z.B. 0-5), Anzahl an Radsensoren (z.B. 0-4) des Fahrzeugs, Fahrzeugsteuerungsgerät (z.B. 0-1) des Fahrzeugs, Entertainmentsystem (z.B. 0-1) des Fahrzeugs, Bordcomputer (z.B. 0-1) des Fahrzeugs, Car-2-X-Schnittstelle (z.B. 0-1) etc.) und/oder die Signalquellenarten (z.B. (unterschiedliche) mobile Endgeräte, Radsensorarten des Fahrzeugs, Fahrzeugsteuerungsgerätearten des Fahrzeugs, Entertainmentsystemarten des Fahrzeugs, Bordcomputerarten des Fahrzeugs etc.) von Fahrzeug zu Fahrzeug unterscheiden, aber bei demselben Fahrzeug während des Einfahrens und Ausfahrens im Wesentlichen gleich bleiben. Vorzugsweise wird vorgeschlagen, die jeweiligen Rohsignale beim Einfahren und Ausfahren von Fahrzeugen zu erfassen und diese vorzugsweise bei Bedarf heranzuziehen, wenn eine eineindeutige Zuordnung eines Einfahrtdatensatzes und eines Ausfahrtdatensatzes zueinander (nur) anhand der jeweils bestimmten Kennzeichenketten nicht (mit ausreichender Sicherheit) möglich ist.

Die (zentrale) Datenverarbeitungsvorrichtung kann aus einem oder mehreren Rechner/n gebildet sein und mindestens einen Prozessor umfassen. Der mindestens eine Prozessor (zusammen mit Speichermittel und dergleichen) kann eingerichtet sein zum Ausführen von Softwaremodulen (z.B. Empfangsmodul, Auswertemodul etc.). Beispielsweise kann die Datenverarbeitungsvorrichtung durch mindestens einen lokalen Rechner, der an der Parkvorrichtung des Parksystems angeordnet ist, und/oder mindestens ein entfernt von der Parkvorrichtung angeordnetes Hintergrundsystem gebildet sein. Das Hintergrundsystem kann vorzugsweise aus einem oder mehreren (verteilt angeordneten) Rechner/n (z.B. Server/n) und/oder einem Cloudsystem gebildet sein.

Die Datenverarbeitungsvorrichtung dient dem Einsatz in einem Parksystem und kann insbesondere die Parksystemsteuerung bilden und/oder umfassen. Das Parksystem kann mindestens eine Parkvorrichtung zum Parken von Fahrzeugen bzw. Autos umfassen, wie einen Parkplatz, ein Parkhaus und/oder dergleichen. Eine Parkvorrichtung kann eine Mehrzahl von Stellplätzen umfassen. Über eine Einfahrt der Parkvorrichtung mit einem Einfahrtsbereich kann ein Fahrzeug in die Parkvorrichtung einfahren. Über eine Ausfahrt der Parkvorrichtung mit einem Ausfahrtsbereich kann ein Fahrzeug aus der Parkvorrichtung ausfahren.

Ein- und/ oder Ausfahrt können baulich getrennt sein, beispielsweise mit getrennten Fahrspuren für Ein- und Ausfahrt und jeweils getrennter Zufahrtsvorrichtung, oder kombiniert sein, beispielweise mit einer Ein- und Ausfahrt mit einer gemeinsamen Fahrspur und mit einer gemeinsamen Zufahrtsvorrichtung. Ferner können bei Ein- und/ oder Ausfahrt mehrere Fahrspuren in einer Richtung nebeneinander liegen, insbesondere mit und ohne bauliche Trennung der Fahrspuren.

Das Parksystem umfasst mindestens eine erste Kennzeichenbestimmungseinrichtung und mindestens eine zweite Kennzeichenbestimmungseinrichtung. Vorzugsweise kann eine jeweilige Kennzeichenbestimmungseinrichtung eine LPR-Kennzeichenbestimmungseinrichtung sein. Eine Kennzeichenbestimmungseinrichtung umfasst eine oder mehrere Kamera/s. Bei der mindestens einen ersten Kennzeichenbestimmungseinrichtung kann die mindestens eine Kamera in bzw. an der Einfahrt angeordnet sein. Bei der mindestens einen zweiten Kennzeichenbestimmungseinrichtung kann die mindestens eine Kamera in bzw. an der Ausfahrt angeordnet sein. Die jeweilige Kamera kann derart positioniert sein, dass Bilddaten von den Fahrzeugkennzeichen der jeweils durchfahrenden Fahrzeuge aufgenommen werden können, also die jeweiligen Fahrzeuge das jeweilige Erfassungsfeld der jeweiligen Kamera passieren müssen.

Eine Kennzeichenbestimmungseinrichtung kann mindestens ein Bildauswertemodul umfassen. Beispielsweise kann jede Kennzeichenbestimmungseinrichtung über ein jeweiliges Bildauswertemodul verfügen oder zwei oder mehr Kennzeichenbestimmungseinrichtungen teilen sich ein gemeinsames Bildauswertemodul. Beispielsweise kann die Datenverarbeitungsvorrichtung das mindestens eine Bildauswertemodul umfassen.

Das Bildauswertemodul ist insbesondere eingerichtet zum Bestimmen einer Kennzeichenkette aus den von einer Kamera bereitgestellten Bilddaten bzw. Bildsequenzen. Vorzugsweise kann das mittels der Kamera erfasste Bild, enthaltend das Fahrzeugkennzeichen, durch das Bildauswertemodul insbesondere mittels OCR (Optical Character Recognition) ausgewertet werden, um die Kennzeichenkette zu ermitteln. **Im** Idealfall ist die Kennzeichenkette diejenige Zeichenfolge, die der Kennzeichenkette auf dem Kennzeichenschild entspricht, das am Fahrzeug angebracht und auf den erfassten Bilddaten abgebildet ist.

Ferner umfasst das Parksystem mindestens eine Einfahrtssignalerfassungseinrichtung und mindestens eine Ausfahrtssignalerfassungseinrichtung. Eine Einfahrtssignalerfassungseinrichtung kann an einer Einfahrt angeordnet sein und eine Ausfahrtssignalerfassungseinrichtung an einer Ausfahrt.

Eine entsprechende Signalerfassungseinrichtung kann mindestens einen Empfänger umfassen. Der Empfänger ist insbesondere eingerichtet zum Empfangen von elektromagnetischen Signalen. Insbesondere kann der mindestens eine Empfänger den Einfahrtsbereich (bzw. den Ausfahrtsbereich) mit einem Erfassungsfeld bzw. einer Erfassungsreichweite abdecken. Ein Signal, das eine Sendevorrichtung bzw. eine Signalquelle aussendet, die sich in dem Einfahrtsbereich und/oder dem Ausfahrtsbereich befindet, wird insbesondere durch den mindestens einen Empfänger (stets) empfangen (und insbesondere durch ein Aufzeichnungsmodul der jeweiligen Signalerfassungseinrichtung aufgezeichnet).

Insbesondere ist eine Einfahrtssignalerfassungseinrichtung eingerichtet zum Empfangen von mindestens einem Einfahrtrohsignal, das aus erwartbaren Signalen ermittelt wird, die von Sendequellen, die sich in dem Einfahrtsbereich (zumindest während des Einfahrens eines Fahrzeugs) befinden, ausgesendet werden. Ferner ist insbesondere eine Ausfahrtssignalerfassungseinrichtung eingerichtet zum Empfangen von mindestens einem Ausfahrtrohsignal, das aus erwartbaren Signalen ermittelt wird, die von Sendequellen, die sich in dem Ausfahrtsbereich (zumindest während des Ausfahrens eines Fahrzeugs) befinden, ausgesendet werden. Es versteht sich, dass in der Praxis die Sendequellen Signale mit einer definierten minimalen Sendestärke aussenden müssen bzw. eine ausreichende Sendereichwerte aufweisen müssen, um von der jeweiligen Signalerfassungseinrichtung empfangbar zu sein. Nur diese können als empfangbare Signalquellen gelten. Weiter können die Einfahrt- und die Ausfahrtssignalerfassungseinrichtung in der Praxis dazu eingerichtet sein, insbesondere diejenigen Arten von Rohsignalen zu erfassen, die aus Signalen ermittelt werden, deren Aussendung gemäß marktüblicher Ausstattung von Fahrzeugen und Fahrzeuginsassen überhaupt erwartbar ist. Dies sind beispielsweise Signale von mobilen Endgeräten (Smartphones) der Fahrzeuginsassen, von Radsensoren des Fahrzeugs, von Fahrzeugsteuerungsgeräte des Fahrzeugs, von Entertainmentsystemen des Fahrzeugs, vom Bordcomputer des Fahrzeugs, von Car-2-X-Schnittstellen des Fahrzeugs. Im Gegensatz dazu sind beispielsweise Signale von CB-Funk-Einrichtungen oder dergleichen nicht erwartbar, weil nur wenige Fahrzeuge eine entsprechende Sendequelle mit sich führen, und die Einfahrts- bzw. Ausfahrtssignalerfassungseinrichtung kann dazu eingerichtet sein, solche Signale nicht zu erfassen. Nochmals weiter versteht sich, dass die Ausfahrtssignalerfassungseinrichtung dazu eingerichtet ist, Arten von Rohsignale aus wenigstens einer Signalquelle zu erfassen, die eine Untermenge der Arten von Rohsignalen darstellt, die von der Einfahrtssignalerfassungseinrichtung erfasst werden. Zum Beispiel: Wenn die Einfahrtssignalerfassungseinrichtung Rohsignale auf Basis von Bluetooth und WLAN-Signalen von Sendequellen wie z.B. mobilen Endgeräten und Car-2-X-Schnittstellen erfasst, dann erfasst die Ausfahrtssignalerfassungseinrichtung wenigstens Rohsignale von auf Basis von Bluetooth und/oder WLAN-Signalen von Sendequellen wie z.B. mobilen Endgeräten und/oder Car-2-X-Schnittstellen.

Vorzugsweise kann sich der Kameraerfassungsbereich einer Kamera mit einem Erfassungsfeld eines Empfängers zumindest teilweise überschneiden, beispielsweise im Wesentlichen überschneiden.

Vorzugsweise ist eine jeweilige bestimmte Kennzeichenkette (bzw. die erfassten Bilddaten des zugehörigen Fahrzeugkennzeichens) verknüpft mit einer Kennzeichen-Erfassungszeit. Die Kennzeichen-Erfassungszeit gibt insbesondere den Zeitpunkt an, an dem das Fahrzeugkennzeichen erfasst wurde (insbesondere die Bilddaten aufgezeichnet und/oder die Kennzeichenkette bestimmt wurden).

Ferner ist vorzugsweise ein jeweiliges erfasstes Einfahrtrohsignal bzw. ein jeweiliges erfasstes Ausfahrtrohsignal verknüpft mit einer Signal-Erfassungszeit. Die Signal-Erfassungszeit gibt insbesondere den Zeitpunkt bzw. den Zeitbereich an, an dem bzw. während dem das Rohsignal durch eine jeweilige Signalerfassungseinrichtung empfangen wurde.

Jeweilige Einfahrt-Kennzeichenketten bzw. jeweilige Ausfahrt-Kennzeichenketten und jeweilige Einfahrtrohsignale bzw. jeweilige Ausfahrtrohsignale können durch ein Datensatzgenerierungsmodul, beispielsweise der Datenverarbeitungsvorrichtung, anhand der jeweiligen Erfassungszeiten einander zugeordnet werden, um so einen Einfahrtdatensatz bzw. einen Ausfahrtdatensatz zu bilden. Mit anderen Worten, durch ein zeitsynchrones Zuordnen der jeweiligen Einfahrt-Kennzeichenketten bzw. jeweiligen Ausfahrt-Kennzeichenketten und jeweiligen Einfahrtrohsignale bzw. jeweiligen Ausfahrtrohsignale zueinander kann ein jeweiliger Einfahrtdatensatz bzw. Ausfahrtdatensatz gebildet werden.

Erfindungsgemäß erfolgt das Erfassen des mindestens einen Einfahrtrohsignals während des Einfahrens des Fahrzeugs. Dies meint insbesondere, dass die Einfahrtrohsignale in dem Einfahrtsbereich erfasst werden, während sich das Fahrzeug in diesem Einfahrtsbereich befindet und die Bilddaten des Fahrzeugs durch die erste Kennzeichenbestimmungseinrichtung aufgenommen werden. Es wird insbesondere nur ein einzelnes Rohsignal erfasst, wenn sich nur eine erfasste Signalquelle in dem Einfahrtsbereich befindet.

Erfindungsgemäß erfolgt das Erfassen des mindestens einen Ausfahrtrohsignals während des Ausfahrens des Fahrzeugs. Dies meint insbesondere, dass die Ausfahrtrohsignale in dem Ausfahrtsbereich erfasst werden, während sich das Fahrzeug in diesem Ausfahrtsbereich befindet und die Bilddaten des Fahrzeugs durch die zweite Kennzeichenbestimmungseinrichtung aufgenommen werden. Es wird insbesondere nur ein einzelnes Rohsignal erfasst, wenn sich nur eine erfasste Signalquelle in dem Ausfahrtsbereich befindet.

Insbesondere kann ein jeweiliger Datensatz wie folgt erzeugt werden: Es können vorzugsweise nur diejenigen Einfahrtrohsignale mit der bestimmten Einfahrt-Kennzeichenkette in einem Einfahrtsdatensatz gespeichert werden, die in mindestens einem definierten Zeitraum (also während des Einfahrens des Fahrzeugs) in dem mindestens einen Erfassungsfeld des Empfängers der Einfahrtsignalerfassungseinrichtung erfasst wurden. Der mindestens eine definierte Zeitraum kann abhängig sein von: Öffnungszeitpunkt eines Sperrmittels (z.B. Schrankenbaum) einer Zufahrtsvorrichtung und/oder Erfassungszeitpunkt des Fahrzeugkennzeichens. Die Zeiträume können abhängig von der räumlichen Anordnung und/oder Entfernung von Sperrmittel, Kamera und/oder Erfassungsfeldern gewählt sein.

Beispielsweise können Daten aus ersten Signalen, die in den x (z.B. 1-5) Sekunden bevor ein Sperrmittel öffnet, in dem mindestens einen Erfassungsfeld vor dem Sperrmittel erfasst wurden, und vorzugsweise gleiche Daten aus zweiten Signalen, die in den x (z.B. 1-5) Sekunden nach dem Öffnen des Sperrmittels in dem mindestens einen Erfassungsfeld hinter dem Sperrmittel erfasst wurden, berücksichtigt werden zum Bilden eines Einfahrtrohsignals. Das Einfahrtrohsignal kann also gebildet werden aus einer Schnittmenge der Daten, die im ersten Signal (vor dem Sperrmittel) erfasst wurden, und der Daten, die im zweiten Signal (nach dem Sperrmittel) erfasst wurden. Insbesondere kann das Einfahrtrohsignal gebildet werden aus der größten Schnittmenge der Daten, die im ersten Signal (vor dem Sperrmittel) erfasst wurden, und der Daten, die im zweiten Signal (nach dem Sperrmittel) erfasst wurden. Damit kann insbesondere sichergestellt werden, dass die Daten im Einfahrtsrohsignal von Datenquellen stammen, die sich tatsächlich in oder an dem einfahrenden Fahrzeug befinden. Beispielsweise können ein erster Erfassungsbereich vor dem Sperrmittel und ein zweiter Erfassungsbereich hinter dem Sperrmittel vorgesehen sein, die den Einfahrtsbereich bilden, und von dem mindestens einen Empfänger, bevorzugt mindestens zwei Empfängern, abgedeckt werden. In diesem Fall kann das Fahrzeug (mit der mindestens einen Sendequelle) vor dem Öffnen des Sperrmittels sich in dem ersten Erfassungsbereich vor dem Sperrmittel aufhalten und nach dem Öffnen des Sperrmittels in dem zweiten Erfassungsbereich hinter dem Sperrmittel. Rohsignale anderer Fahrzeuge, die beispielsweise in einer Einfahrtsschlange stehen, werden somit insbesondere nicht dem Einfahrtsdatensatz von diesem Fahrzeug zugeordnet. Die Zuordnung von Rohsignalen zu einem Fahrzeugkennzeichen an der Einfahrt kann dadurch verbessert werden.

Dabei stellt eine Schnittmenge von Daten aus wenigstens einem ersten erfassten (Funk-)Signal und von Daten aus wenigstens einem zweiten erfassten (Funk-)Signal beispielsweis eine Zeichenfolge dar, die gleichermaßen in dem ersten und dem zweiten Signal codiert ist. Die Zeichenfolge kann als eine Folge von Bits (Einsen und Nullen) verstanden werden oder als eine Folge von Bytes (also 8-Bit-Gruppen, die ihrerseits Buchstaben, Zahlen und Symbole repräsentieren) oder als eine Folge anderweitig repräsentierten Symbolen. Erfindungswesentlich ist, dass die Datenverarbeitungsvorrichtung keine Dateninhaltsauswertung der Signale vorzunehmen braucht, also keine Kenntnis benötigt über die eigentliche Information, die mittels der erfassten ersten und zweiten Signale übermittelt werden soll. Für die Schnittmenge charakteristisch ist einzig die Übereinstimmung einer Zeichenfolge, die im erstem und dem zweiten Signal auftritt. Die Größe der Schnittmenge entspricht dabei der Länge der Zeichenfolge, die übereinstimmend im ersten und zweiten Signal auftritt; die Größe der Schnittmenge entspricht also der Anzahl der Zeichen, die in identischer Reihenfolge im ersten und zweiten Signal auftreten. Die größte Schnittmenge ist dem entsprechend die längste auffindbare Zeichenfolge, die übereinstimmend im ersten und zweiten Signal auftritt. Es versteht sich, dass die Schnittmenge aus mehreren übereinstimmenden Zeichenfolgen gebildet sein kann.

In einer anderen Ausführungsform kann ein erster Erfassungsbereich vor dem Sperrmittel vorgesehen sein und von einem ersten Empfänger mit einem ersten Erfassungsfeld abgedeckt werden, und ein zweiter Erfassungsbereich kann hinter dem Sperrmittel vorgesehen sein und von dem einem zweiten Empfänger mit einem zweiten Erfassungsfeld abgedeckt werden, wobei das erste und das zweite Erfassungsfeld einander im Wesentlichen nicht überlappen. Zu diesem Zweck können der erste und der zweite Empfänger entsprechend ausgerichtet und/oder gegeneinander abgeschirmt sein.

An einer Ausfahrt können die Rohsignale insbesondere vor einem Sperrmittel erfasst werden, ansonsten aber in analoger Weise zu den vorherigen Ausführungen, so dass auf diese hier verwiesen wird.

An einer Zufahrtsvorrichtung ohne Sperrmittel kann das Erfassen der Rohsignale insbesondere von der jeweiligen Erfassungszeit des jeweiligen Fahrzeugkennzeichens bzw. der Kennzeichenkette abhängen.

Optional kann, beispielsweise zusätzlich zu dem Öffnungsvorgang des Sperrmittels, auch die Belegung einer Bodenschleife, die, insbesondere vor einem Sperrmittel, im Boden des Einfahrtsbereichs installiert sein kann, analysiert werden. Dadurch kann festgestellt werden, ob ein Fahrzeug (mit hoher Wahrscheinlichkeit) das Sperrmittel nach dem Öffnen und vor dem Schließen durchfahren hat.

Wie beschrieben, kann das Parksystem, insbesondere die Datenverarbeitungsvorrichtung, mindestens ein Datensatzgenerierungsmodul umfassen. Das Empfangsmodul kann den mindestens einen Einfahrtdatensatz und/oder den mindestens einen Ausfahrtdatensatz von dem Datensatzgenerierungsmodul empfangen bzw. erhalten.

Die empfangenen Einfahrtdatensätze werden durch ein Speichermodul in einem Datenspeicher gespeichert, insbesondere in einer Datenbank der Datenverarbeitungsvorrichtung. Optional können auch die empfangenen Ausfahrtdatensätze durch das Speichermodul in dem Datenspeicher gespeichert werden.

Die Datenverarbeitungsvorrichtung umfasst mindestens ein Auswertemodul. Das Auswertemodul kann auf den Datenspeicher zugreifen. Das Auswertemodul ist insbesondere eingerichtet zum Zuordnen eines (empfangenen) Ausfahrtdatensatzes zu dem dazu korrespondierenden (gespeicherten) Einfahrtdatensatz. Eine entsprechende Zuordnung kann insbesondere (unmittelbar) vor einem Freigeben eines Ausfahrens eines Fahrzeugs erfolgen. Das Zuordnen erfolgt insbesondere dann, wenn eine (eindeutige) Korrespondenz zwischen einem empfangenen Ausfahrtdatensatz und einem gespeicherten Einfahrtdatensatz durch das Auswertemodul festgestellt wird.

Für ein Zuordnen bzw. Feststellen einer (ausreichenden) Korrespondenz ist das Auswertemodul erfindungsgemäß eingerichtet zum Vergleichen, in einem ersten Vergleichsschritt, der Ausfahrt-Kennzeichenkette des (empfangenen) Ausfahrtdatensatzes mit den jeweiligen Einfahrt-Kennzeichenketten der gespeicherten Einfahrtdatensätze. Insbesondere kann das Vergleichen ein Feststellen umfassen, ob die Ausfahrt-Kennzeichenkette des (empfangenen) Ausfahrtdatensatzes identisch ist mit einer Einfahrt-Kennzeichenkette der gespeicherten Einfahrtdatensätze. Es versteht sich, dass nur ein Einfahrtdatensatz gespeichert sein kann.

Erfindungsgemäß ist das Auswertemodul eingerichtet zum Durchführen eines zweiten Vergleichsschritts zumindest dann, wenn in dem ersten Vergleichsschritt in den gespeicherten Einfahrtdatensätze keine Einfahrt-Kennzeichenkette identifiziert werden kann, die identisch ist mit der Einfahrt-Kennzeichenkette des empfangenen Ausfahrtdatensatzes. In dem zweiten Vergleichsschritt vergleicht das Auswertemodul das mindestens eine Ausfahrtrohsignal (vorzugsweise sämtliche Ausfahrtrohsignale) des (empfangenen) Ausfahrtdatensatzes zumindest mit dem mindestens einen Einfahrtrohsignal (vorzugsweise sämtlichen Einfahrtrohsignalen) von demjenigen Einfahrtdatensatz, welcher die Einfahrt-Kennzeichenkette mit der höchsten Ähnlichkeit bzw. höchsten Übereinstimmung mit der Ausfahrt-Kennzeichenkette des Ausfahrtdatensatzes enthält. Bei Varianten der Erfindung können auch eine Mehrzahl von zweiten Vergleichsschritten durchgeführt werden, beispielsweise mit den x (z.B. mit x zwischen 2 und 5) ähnlichsten Fahrzeugkennzeichen.

Insbesondere kann das Auswertemodul eingerichtet sein, in einem Zwischenschritt, der insbesondere zwischen dem ersten und zweiten Vergleichsschritt erfolgen kann, zum Bestimmen eines Ähnlichkeitsfaktors zwischen der Ausfahrt-Kennzeichenkette des Ausfahrtdatensatzes und der jeweiligen Einfahrt-Kennzeichenkette der gespeicherten Einfahrtdatensätze. Basierend auf diesem Zwischenschritt kann zumindest der Einfahrtdatensatz bestimmt werden, dessen Fahrzeugkennzeichen die höchste Ähnlichkeit bzw. Übereinstimmung mit dem Fahrzeugkennzeichen des Ausfahrtdatensatzes besitzt. Wie beschrieben, können auch mehrere Einfahrtdatensätze (beispielsweise mit den x (z.B. mit x zwischen 2 und 5) ähnlichsten Fahrzeugkennzeichen) bestimmt werden, um deren jeweilige Einfahrtrohsignale in dem zweiten Vergleichsschritt zu vergleichen.

In dem zweiten Vergleichsschritt wird durch das Auswertemodul das mindestens eine Ausfahrtrohsignal (insbesondere sämtliche erfasste Ausfahrtrohsignale) mit dem mindestens einen Einfahrtrohsignal (insbesondere sämtliche erfasste Einfahrtrohsignale) des (identifizierten) Einfahrtdatensatzes verglichen. Das Vergleichen zweier jeweiliger Rohsignale meint insbesondere, dass kein inhaltlicher Vergleich der jeweils enthaltenden Dateninhalts erfolgt. Das Vergleichen zweier Rohsignale kann insbesondere meinen, die größte Schnittmenge der Daten beider Rohsignale zu bestimmen und insbesondere die Größe der größten Schnittmenge zu bestimmen. Insbesondere kann der Ähnlichkeitsfaktor zweier miteinander verglichener Rohsignal die Größe der größten Schnittmenge der Daten beider Rohsignale sein. Eine Dateninhaltauswertung unterbleibt in dem zweiten Vergleichsschritt. Ein inhaltliches Verständnis der erfassten Rohsignale ist erfindungsgemäß insbesondere nicht notwendig. So wird beispielsweise keine Kennung einer jeweiligen Sendevorrichtung bestimmt, so dass auch keine Kennungen miteinander verglichen werden.

Gemäß einer bevorzugten Ausführungsform der erfindungsgemäßen Datenverarbeitungsvorrichtung kann das Auswertemodul eingerichtet sein zum Durchführen des zweiten Vergleichsschritts nur dann, wenn in dem ersten Vergleichsschritt keine zur Ausfahrt-Kennzeichenkette identische Einfahrt-Kennzeichenkette ermittelt wurde. Mit anderen Worten, wenn in dem ersten Vergleichsschritt als erstes positives Vergleichsergebnis bestimmt wird, dass die Ausfahrt-Kennzeichenkette des Ausfahrtdatensatzes identisch ist mit einer Einfahrt-Kennzeichenkette des Einfahrtdatensatzes, kann der zweite Vergleichsschritt entfallen. Rechenzeit und/oder Rechenleistung kann reduziert werden. Es versteht sich, dass bei anderen Varianten der Erfindung zusätzlich auch bei einem ersten positiven Vergleichsergebnis der zweite Vergleichsschritt durchgeführt werden kann, insbesondere als zusätzliche Bestätigung des ersten positiven Vergleichsergebnisses. Die Zuverlässigkeit kann noch weiter verbessert werden.

Gemäß einer weiteren bevorzugten Ausführungsform der erfindungsgemäßen Datenverarbeitungsvorrichtung kann das Auswertemodul eingerichtet sein zum Vergleichen, in dem zweiten Vergleichsschritt, des mindestens einen Ausfahrtrohsignals des Ausfahrtdatensatzes mit dem mindestens einen Einfahrtrohsignal des Einfahrtdatensatzes der gespeicherten Einfahrtdatensätze, welcher diejenige Einfahrt-Kennzeichenkette enthält, die der Ausfahrt-Kennzeichenkette des Ausfahrtdatensatzes am ähnlichsten ist, ohne ein Extrahieren bzw. Bestimmen des Dateninhalts des mindestens einen Ausfahrtrohsignals und/oder ohne ein Extrahieren bzw. Bestimmen des Dateninhalts des mindestens einen Einfahrtrohsignals. Mithin ist in der Datenverarbeitungsvorrichtung keine Intelligenz oder Wissen erforderlich, um den Dateninhalt (z.B. eine Kennung und/oder dergleichen) zu bestimmen. Der Implementierungsaufwand kann noch weiter verringert werden.

Wie bereits beschrieben wurde, ist das Auswertemodul eingerichtet zum Feststellen eines zu dem empfangenen Ausfahrtdatensatz korrespondierenden Einfahrtdatensatzes aus den gespeicherten Einfahrtdatensätzen, um insbesondere die zueinander korrespondierenden Datensätze einander zuzuordnen bzw. miteinander zu verknüpfen. Gemäß einer weiteren Ausführungsform der erfindungsgemäßen Datenverarbeitungsvorrichtung kann das Auswertemodul eingerichtet sein zum Feststellen eines zu dem empfangenen Ausfahrtdatensatz korrespondierenden Einfahrtdatensatzes aus den gespeicherten Einfahrtdatensätzen, wenn
- in dem ersten Vergleichsschritt festgestellt wird, dass die Einfahrt-Kennzeichenkette des korrespondierenden Einfahrdatensatzes mit der Ausfahrt-Kennzeichenkette des empfangenen Ausfahrtdatensatzes identisch ist,
   oder
- in dem zweiten Vergleichsschritt festgestellt wird, dass das Einfahrtrohsignal des korrespondierenden Einfahrtdatensatzes und das Ausfahrtrohsignal des empfangenen Ausfahrtdatensatzes ein Übereinstimmungskriterium erfüllen.

Wenn in dem ersten Vergleichsschritt festgestellt wird, dass die Ausfahrt-Kennzeichenkette des Ausfahrtdatensatz identisch ist mit einer Einfahrt-Kennzeichenkette eines ersten Einfahrtdatensatz, wird dieser Ausfahrtdatensatz diesem ersten Einfahrtdatensatz zugeordnet. In diesem Fall korrespondieren Einfahrtdatensatz und Ausfahrtdatensatz (eineindeutig) zueinander und werden insbesondere miteinander verknüpft.

Eine Zuordnung bzw. Verknüpfung kann auch dann erfolgen, wenn in dem ersten Vergleichsschritt keine Identität zwischen der Ausfahrt-Kennzeichenkette und einer der Einfahrt-Kennzeichenketten festgestellt wird, jedoch das mindestens eine Einfahrtrohsignal des Einfahrtdatensatzes mit der Einfahrt-Kennzeichenkette, das der Ausfahrt-Kennzeichenkette des Ausfahrtdatensatzes am ähnlichsten ist, und das mindestens eine Ausfahrtrohsignal des Ausfahrtdatensatzes das mindestens eine Übereinstimmungskriterium erfüllen.

Das Übereinstimmungskriterium gibt insbesondere an, wann zwischen dem mindestens einen Einfahrtrohsignal und dem mindestens einen Ausfahrtrohsignal eine ausreichende Übereinstimmung vorhanden ist, so dass (ausreichend) sichergestellt ist, dass der Einfahrtdatensatz und der Ausfahrtdatensatz von demselben Fahrzeug stammen. Bei einer Ausführungsform kann das Übereinstimmungskriterium vordefiniert sein. Beispielsweise kann das Übereinstimmungskriterium ein Grenzwert sein, der angibt, ab wann ein Einfahrtrohsignal eines Einfahrtdatensatzes und ein Ausfahrtrohsignal eines Ausfahrtdatensatzes als übereinstimmend zu bewerten sind.

Das Vergleichen des mindestens einen Einfahrtrohsignals mit dem mindestens einen Ausfahrtrohsignal in dem zweiten Vergleichsschritt kann insbesondere ein Bestimmen der übereinstimmenden Signalteile (z.B. ein (reiner) Vergleich der jeweiligen Bitstreams) der genannten Rohsignale umfassen. Insbesondere ist erkannt worden, dass sich Teile der Payload, die von einer Signalquelle ausgesendet wird, zumindest teilweise im Verlaufe der Zeit ändern kann, also insbesondere zwischen der Einfahrtzeit und Ausfahrtzeit. Wie bereits beschrieben, kann das Übereinstimmungskriterium festlegen, ab wann die genannten Rohsignale eine ausreichende Ähnlichkeit haben, damit festgestellt werden kann, dass der Einfahrtdatensatz und der Ausfahrtdatensatz von demselben Fahrzeug stammen. In besonders zuverlässiger und einfacher Weise können Einfahrtdatensatz und Ausfahrtdatensatz einander auch ohne identisches Fahrzeugkennzeichen zugeordnet werden.

Gemäß einer Ausführungsform kann bei jedem Vergleich eines gespeicherten Einfahrtrohsignals mit dem Ausfahrtrohsignals das jeweilige Übereinstimmungskriterium die Größe der Schnittmenge der Daten des jeweiligen Einfahrtrohsignals und des Ausfahrtrohsignals sein. Beim Vergleichen des Ausfahrtrohsignals mit den gespeicherten Einfahrtrohsignalen hat dasjenige Einfahrtrohsignal, das die größte Schnittmenge liefert, das beste Übereinstimmungskriterium, und der zugehörige Einfahrtdatensatz kann als korrespondierend zu dem Ausfahrtdatensatz festgestellt werden. Gemäß dieser weiteren Ausführungsform der erfindungsgemäßen Datenverarbeitungsvorrichtung kann das Auswertemodul eingerichtet sein zum Feststellen eines zu dem empfangenen Ausfahrtdatensatz korrespondierenden Einfahrtdatensatzes aus den gespeicherten Einfahrtdatensätzen, durch:
- fortlaufendes Vergleichen, in einem ersten Vergleichsschritt, der Ausfahrt-Kennzeichenkette des Ausfahrtdatensatzes mit den jeweiligen Einfahrt-Kennzeichenketten der gespeicherten Einfahrtdatensätze und Feststellen des korrespondierenden Einfahrtdatensatzes sowie Beenden des ersten Vergleichsschritts, sobald eine gespeicherte Einfahrt-Kennzeichenkette gefunden wurde, die mit der Ausfahrt-Kennzeichenkette identisch ist, oder wenn keine zur Ausfahrt-Kennzeichenkette identische Einfahrt-Kennzeichenkette aus der Gesamtheit aller gespeicherten Einfahrt-Kennzeichenketten ermittelt werden kann, und/oder
- zumindest dann, wenn in dem ersten Vergleichsschritt keine zur Ausfahrt-Kennzeichenkette identische Einfahrt-Kennzeichenkette ermittelt wurde: Vergleichen, in einem zweiten Vergleichsschritt, des mindestens einen Ausfahrtrohsignals des Ausfahrtdatensatzes mit dem mindestens einen Einfahrtrohsignal des mindestens einen Einfahrtsdatensatz, bevorzugt der mindestens zwei Einfahrtdatensätze, der gespeicherten Einfahrtdatensätze, welche diejenigen Einfahrt-Kennzeichenketten enthalten, die der Ausfahrt-Kennzeichenkette des Ausfahrtdatensatzes am ähnlichsten sind, Ermitteln jeweils einer Schnittmenge der jeweiligen Einfahrtrohsignale des mindestens einen Einfahrtsdatensatz, bevorzugt der mindestens zwei Einfahrtdatensätze, mit dem Ausfahrtrohsignal und Feststellen des korrespondierenden Einfahrtdatensatzes anhand der größten ermittelten Schnittmenge.

Gemäß einer weiteren bevorzugten Ausführungsform der erfindungsgemäßen Datenverarbeitungsvorrichtung kann das Auswertemodul eingerichtet sein zum Bestimmen (z.B. in dem genannten Zwischenschritt) eines Ähnlichkeitsfaktors zwischen zwei in dem ersten Vergleichsschritt verglichenen (und insbesondere nicht identischen) Kennzeichenketten, basierend auf einem Messen einer Levenshtein-Distanz zwischen den verglichenen Kennzeichenketten. Mit dem Messen der Levenshtein-Distanz wird insbesondere die minimale Anzahl der notwendigen Änderungen bestimmt, um zwei Zeichenketten aneinander anzugleichen. Das Auswertemodul kann eingerichtet sein zumindest zum Bestimmen derjenigen Kennzeichenketten, die sich am ähnlichsten sind, basierend auf den (jeweils) bestimmten Ähnlichkeitsfaktoren. Mit anderen Worten, die beiden verglichenen Kennzeichenketten mit der geringsten Levenshtein-Distanz können durch das Auswertemodul als am ähnlichsten bestimmt werden. In entsprechender Weise können bei Varianten der Erfindung die nächst-ähnlichsten Kennzeichenketten bzw. deren jeweilige Datensätze bestimmt werden. In einfacher Weise kann die Ähnlichkeit von Kennzeichenketten bzw. Einfahrt- und Ausfahrtdatensätzen ermittelt werden.

Gemäß einer weiteren bevorzugten Ausführungsform der erfindungsgemäßen Datenverarbeitungsvorrichtung kann das Auswertemodul eingerichtet sein zum dynamischen Bestimmen des Übereinstimmungskriterium, basierend zumindest auf dem Ähnlichkeitsfaktor der Kennzeichenketten, die sich am ähnlichsten sind. Insbesondere kann das Übereinstimmungskriterium nach folgender Regel bestimmt werden. Je unähnlicher sich die Fahrzeugkennzeichen sind (beispielsweise je größer die Levenshtein-Distanz ist), desto höher muss die Übereinstimmung des mindestens einen Einfahrtrohsignals des entsprechenden Einfahrtdatensatzes und des mindestens einen Ausfahrtrohsignals des entsprechenden Ausfahrtdatensatzes sein. Selbst bei größeren Abweichungen zwischen den Fahrzeugkennzeichen kann hierdurch eine Zuordnung der genannten Datensätze in zuverlässiger Weise ermöglicht werden. Die Quote der erfolgreichen (und korrekten) Zuordnungen kann noch weiter gesteigert werden.

Wie bereits beschrieben wurde, kann, gemäß einer bevorzugten Ausführungsform der erfindungsgemäßen Datenverarbeitungsvorrichtung der Einfahrtdatensatz eine Mehrzahl von erfassten Einfahrtrohsignale enthalten, ausgesendet durch eine entsprechende Mehrzahl von Sendevorrichtungen (bzw. Signalquellen). Alternativ oder zusätzlich kann der Ausfahrtdatensatz eine Mehrzahl von erfassten Ausfahrtrohsignale enthalten, ausgesendet durch eine entsprechende Mehrzahl von Sendevorrichtungen.

Gemäß einer weiteren bevorzugten Ausführungsform der erfindungsgemäßen Datenverarbeitungsvorrichtung kann eine Sendevorrichtung (insbesondere die Mehrzahl von Sendevorrichtungen) ausgewählt sein aus der Gruppe, umfassend:
- mobiles Endgerät,
- Radsensor des Fahrzeugs,
- Fahrzeugsteuerungsgerät des Fahrzeugs,
- Entertainmentsystem des Fahrzeugs,
- Bordcomputer des Fahrzeugs
- Car-2-X-Schnittstelle des Fahrzeugs.

Insbesondere ist festgestellt worden, dass die genannten Sendequellen Rohsignale aussenden, die geeignet sind, ein erstes Fahrzeug von einem zweiten Fahrzeug zu unterscheiden, beispielsweise aufgrund der unterschiedlichen Signalanzahl und/oder Signalart. Die Rohsignale können beispielsweise sein Bluetooth, WLAN, IEEE 802.11p, Cellular-V2X (bzw. 3GPP), Mobilfunk, ISM (Industrial, Scientific and Medical) Radio Band etc. So sendet ein Radsensor regelmäßig Sensordaten über den Reifen (Z.B. Druck, Temperatur etc.) aus. Auch ein Fahrzeugsteuerungsgerät sendet regelmäßig Steuerungssignale aus. Auch Entertainmentsystem und Bordcomputer sind Signalquellen, deren Rohsignale durch eine genannten Signalerfassungseinrichtung erfassbar sind. Es ist erkannt worden, dass insbesondere die Summe der durch ein Fahrzeug ausgesendeten bzw. abgestrahlten Rohsignale das Fahrzeug charakterisieren und insbesondere von anderen Fahrzeugen unterscheidbar machen.

Insbesondere ermöglicht die Auswertung der erfassten Kennzeichenketten und der jeweils erfassten Rohsignale zusammen eine Zuordnung von (korrekten) Einfahrt- und Ausfahrtdatensätzen mit einer (hohen) Quote von insbesondere über 99 %, wie insbesondere Tests gezeigt haben.

Vorzugsweise können die Einfahrtrohsignale und/oder die Ausfahrtrohsignale zumindest teilweise Advertisement-Signale sein.

Gemäß einer weiteren Ausführungsform der erfindungsgemäßen Datenverarbeitungsvorrichtung kann die Datenverarbeitungsvorrichtung mindestens ein Freigabemodul umfassen. Das Freigabemodul kann eingerichtet sein zum Freigeben einer in dem Ausfahrtsbereich angeordneten Zufahrtsvorrichtung (mit und ohne Sperrelement), zumindest basierend auf dem Auswerteergebnis des Auswertemoduls. Basierend auf dem Auswerteergebnis meint insbesondere, dass die genannte Zufahrtsvorrichtung (nur) dann für ein Durchfahren des Fahrzeugs freigegeben wird, wenn der Ausfahrtdatensatz des Fahrzeugs einem Einfahrtdatensatz zugeordnet werden kann. Ferner meint basierend auf dem Auswerteergebnis insbesondere, dass die genannte Zufahrtsvorrichtung dann für ein Durchfahren des Fahrzeugs gesperrt wird (bzw. bleibt), wenn der Ausfahrtdatensatz des Fahrzeugs einem Einfahrtdatensatz nicht zugeordnet werden kann. Beispielsweise kann bei einem Freigeben ein Aktor zum Bewegen des Sperrelements angesteuert werden, um dies zu öffnen (oder zu schließen) und/oder eine Lichtsignalvorrichtung (z.B. eine Ampel), um eine Freigabe mittels Lichtsignal anzuzeigen.

Alternativ oder zusätzlich kann der Einfahrtdatensatz einen Einfahrtszeitpunkt des Fahrzeugs enthalten. Die Datenverarbeitungsvorrichtung kann ferner ein Parkdauerbestimmungsmodul umfassen. Das Parkdauerbestimmungsmodul kann eingerichtet sein zum Bestimmen der Parkdauer des Fahrzeugs, basierend auf dem Einfahrtszeitpunkt des Fahrzeugs und einem bereitgestellten Ausfahrtszeitpunkt des Fahrzeugs. Beispielsweise kann der Ausfahrtszeitpunkt der Kennzeichenbestimmungszeitpunkt des Ausfahrtdatensatzes sein. Beispielsweise kann abhängig von der bestimmten Parkdauer eine Abrechnung des Parkvorgangs (in bekannter Weise) erfolgen.

Gemäß einer weiteren Ausführungsform der erfindungsgemäßen Datenverarbeitungsvorrichtung kann die Datenverarbeitungsvorrichtung ferner mindestens eine Nutzerdatenbank umfassen. Die Nutzerdatenbank, beispielsweise implementiert in einem Datenspeicher der Datenverarbeitungsvorrichtung, kann eingerichtet sein zum Speichern von Nutzerdatensätzen, enthaltend jeweils zumindest mindestens eine Nutzerkennung, ein Fahrzeugkennzeichen, insbesondere das wahre Fahrzeugkennzeichen aus einem Registrierungsvorgang eines Nutzers, und mindestens ein Datenfeld zum Speichern von Rohsignaldatensätzen (mit mindestens einem Rohsignal, wie einem Einfahrts- und/oder Ausfahrtrohsignal). Die Nutzerkennung kann insbesondere eindeutig den Nutzer (des Fahrzeugs mit dem Fahrzeugkennzeichen des Nutzerdatensatzes) identifizieren. Ein Nutzerdatensatz kann mindestens ein weiteres Datum enthalten, wie Abrechnungsdaten (z.B. Kontodaten, Kreditkartendaten etc.) zum Abrechnen von Parkvorgängen, Adressdaten des Nutzers, Parkattribute des Nutzers (z.B. Dauerparker etc.) und/oder dergleichen.

Die Datenverarbeitungsvorrichtung kann mindestens ein Aktualisierungsmodul umfassen. Das Aktualisierungsmodul kann eingerichtet sein zum Hinzufügen des mindestens einen Einfahrtrohsignals aus einem empfangenen Einfahrtdatensatz zu demjenigen Nutzerdatensatz, dessen Kennenzeichen mit der Einfahrt-Kennzeichenkette aus dem empfangenen Einfahrtdatensatz identisch ist, und/oder zum Hinzufügen des mindestens einen Ausfahrtrohsignals aus einem empfangenen Ausfahrtdatensatz zu demjenigen Nutzerdatensatz, dessen Kennenzeichen mit der Ausfahrt-Kennzeichenkette aus dem empfangenen Ausfahrdatensatz identisch ist. Insbesondere kann das Aktualisierungsmodul eingerichtet sein zum Bestimmen eines Nutzerdatensatzes anhand eines beim Einfahren oder Ausfahren erfassten und insbesondere bestimmten Fahrzeugkennzeichens.

Bei Varianten der Erfindung können gespeicherte Einfahrtrohsignale und/oder Ausfahrtrohsignale abhängig von mindestens einer vorgegebenen Bedingung aus dem Nutzerdatensatz gelöscht werden, beispielsweise nach Ablauf einer bestimmten Zeitdauer oder bei Erreichen einer maximal zulässigen Anzahl an Einfahrtrohsignale und/oder Ausfahrtrohsignalen.

Gemäß einer weiteren Ausführungsform der erfindungsgemäßen Datenverarbeitungsvorrichtung kann das Auswertemodul eingerichtet sein zum Feststellen eines zu dem empfangenen Ausfahrtdatensatz korrespondierenden Nutzerdatensatzes aus den gespeicherten Einfahrtdatensätzen durch:
- Vergleichen, in einem dritten Vergleichsschritt, der Ausfahrt-Kennzeichenkette des Ausfahrtdatensatzes mit den jeweiligen Fahrzeugkennzeichen der gespeicherten Nutzerdatensätze, und
- Vergleichen, in einem vierten Vergleichsschritt, (nur) des mindestens einen Ausfahrtrohsignals des Ausfahrtdatensatzes mit dem mindestens einen Rohsignaldatensatz des Nutzerdatensatzes der gespeicherten Nutzerdatensätze, welcher das Fahrzeugkennzeichen enthält, das der Ausfahrt-Kennzeichenkette des Ausfahrtdatensatzes am ähnlichsten ist, zumindest dann, wenn in dem dritten Vergleichsschritt kein zur Ausfahrt-Kennzeichenkette identisches Fahrzeugkennzeichen ermittelt wurden.

Das Vergleichen in dem dritten Vergleichsschritt kann in analoger Weise wie der erste Vergleichsschritt erfolgen, so dass die Ausführungen zu dem ersten Vergleichsschritt auf den dritten Vergleichsschritt übertragen werden können. Ferner kann das Vergleichen in dem vierten Vergleichsschritt in analoger Weise wie der zweite Vergleichsschritt erfolgen, so dass die Ausführungen zu dem zweiten Vergleichsschritt auf den vierten Vergleichsschritt übertragen werden können. Ferner kann ein weiterer Zwischenschritt vorgesehen sein, der in analoger Weise wie der zuvor beschriebene Zwischenschritt erfolgen kann, so dass die Ausführungen zu dem zuvor beschriebene Zwischenschritt auf den weiteren Zwischenschritt übertragen werden können. **In** noch zuverlässigerer Weise kann bei einem Parksystem ein Ausfahrtdatensatz einem (korrekter) Einfahrtdatensatz zugeordnet werden.

Gemäß einer weiteren Ausführungsform der erfindungsgemäßen Datenverarbeitungsvorrichtung kann der dritte Vergleichsschritt ausgeführt werden durch
- fortlaufendes Vergleichen, in einem dritten Vergleichsschritt, der Ausfahrt-Kennzeichenkette des Ausfahrtdatensatzes mit den jeweiligen Fahrzeugkennzeichen der gespeicherten Nutzerdatensätze und Beenden des dritten Vergleichsschritts, sobald eine Fahrzeugkennzeichen gefunden wurde, das mit der Ausfahrt-Kennzeichenkette identisch ist, oder wenn kein zur Ausfahrt-Kennzeichenkette identisches Fahrzeugkennzeichen in der Gesamtheit aller gespeicherten Nutzerdatensätze ermittelt werden kann.

Gemäß einer bevorzugten Ausführungsform des erfindungsgemäßen Parksystem kann das Parksystem mindestens eine an der Einfahrt der Parkvorrichtung angeordnete (beschrankte) Zufahrtsvorrichtung mit mindestens einem Sperrmittel umfassen. Vorzugsweise kann als Sperrelement eine Schranke vorgesehen sein, beispielsweise ein an einer Säule bzw. einer Basis der Zufahrtsvorrichtung schwenkbar angeordneter Schrankenbaum. Bei Varianten der Erfindung kann an der Zufahrtsvorrichtung als Sperrmittel ein Rolltor, Schwenktor, Sektionaltor, versenkbarer Poller und dgl. alternativ oder zusätzlich vorgesehen sein. Das Sperrmittel kann insbesondere einen (ansteuerbaren) Aktor umfassen, eingerichtet zum Bewegen des Sperrmittels zwischen einem geöffneten Zustand und einem geschlossenen Zustand.

Wie bereits beschrieben wurde, kann eine Einfahrtssignalerfassungseinrichtung mindestens einen (elektromagnetischen) Empfänger umfassen, eingerichtet zum Erfassen von Rohsignalen, die von Signalquellen stammen, die sich an oder im Fahrzeug befinden, das sich in dem Einfahrtsbereich befindet. Vorzugsweise kann die Einfahrtssignalerfassungseinrichtung mindestens einen ersten Empfänger umfassen, eingerichtet zum Bereitstellen eines ersten Erfassungsfelds in einer Durchfahrtsrichtung vor dem Sperrmittel (z.B. vor dem Schrankenbaum), und mindestens einen zweiten Empfänger umfassen, eingerichtet zum Bereitstellen eines zweiten Erfassungsfelds in Durchfahrtsrichtung hinter dem Sperrmittel (z.B. hinter dem Schrankenbaum). Die beiden genannten Erfassungsfelder können insbesondere den Einfahrtsbereich bilden bzw. abdecken.

Wie bereits beschrieben wurde, kann die erste Kennzeichenbestimmungseinrichtung mindestens eine an der Einfahrt angeordnete Kamera umfassen. Das Erfassungsfeld der Kamera und das erste Erfassungsfeld können sich zumindest teilweise überlappen.

Besonders bevorzugt kann zwischen dem ersten Empfänger und dem zweiten Empfänger eine (elektromagnetische) Abschirmung angeordnet sein.

Weiter kann das Parksystem, insbesondere, wenn es den ersten und den zweiten Empfänger umfasst, ein Datensatzvereinheitlichungsmodul umfassen, eingerichtet
- zum Empfangen der durch die erste Kennzeichenbestimmungseinrichtung bestimmten Einfahrts-Kennzeichenkette eines in eine Parkvorrichtung des Parksystems einfahrenden Fahrzeugs,
- zum Empfangen des mindestens einen durch den ersten Empfänger in einem ersten Erfassungsfeld während des Einfahrens des Fahrzeugs vor dem Sperrmittel erfassten ersten Einfahrtrohsignals,
- zum Empfangen mindestens eines durch den zweiten Empfänger in einem zweiten Erfassungsfeld während des Einfahrens des Fahrzeugs hinter dem Sperrmittel erfassten zweiten Einfahrtrohsignals und
- zum Generieren des Einfahrtdatensatzes, enthaltend als Einfahrt-Kennzeichenkette die Einfahrts-Kennzeichenkette des ersten Einfahrtdatensatzes und als Einfahrtrohsignal die Schnittmenge des mindestens einen erfassten ersten Einfahrtrohsignals und des mindestens einen erfassten zweiten Einfahrtrohsignals.

Gemäß einer bevorzugten Ausführungsform des erfindungsgemäßen Parksystem kann das Parksystem mindestens eine an der Ausfahrt der Parkvorrichtung angeordnete (beschrankte) Zufahrtsvorrichtung mit mindestens einem Sperrmittel umfassen. Vorzugsweise kann als Sperrelement eine Schranke vorgesehen sein, beispielsweise ein an einer Säule bzw. einer Basis der Zufahrtsvorrichtung schwenkbar angeordneter Schrankenbaum. Bei Varianten der Erfindung kann an der Zufahrtsvorrichtung als Sperrmittel ein Rolltor, Schwenktor, Sektionaltor, versenkbarer Poller und dgl. alternativ oder zusätzlich vorgesehen sein. Das Sperrmittel kann insbesondere einen (ansteuerbaren) Aktor umfassen, eingerichtet zum Bewegen des Sperrmittels zwischen einem geöffneten Zustand und einem geschlossenen Zustand.

Wie bereits beschrieben wurde, kann eine Ausfahrtssignalerfassungseinrichtung mindestens einen (elektromagnetischen) Empfänger umfassen, eingerichtet zum Erfassen von Rohsignalen, die von Signalquellen stammen, die sich an oder im Fahrzeug befinden, das sich in dem Ausfahrtsbereich befindet. Vorzugsweise kann die Ausfahrtssignalerfassungseinrichtung mindestens einen Empfänger umfassen, eingerichtet zum Bereitstellen eines weiteren Erfassungsfelds in einer Durchfahrtsrichtung vor dem Sperrmittel (z.B. vor dem Schrankenbaum). Der Empfänger kann ein gerichteter Empfänger sein. Wie bereits beschrieben wurde, kann die zweite Kennzeichenbestimmungseinrichtung mindestens eine an der Ausfahrt angeordnete Kamera umfassen. Das Erfassungsfeld der Kamera und das weitere Erfassungsfeld können sich zumindest teilweise überlappen.

Gemäß einer weiteren (alternativen) Ausführungsform des erfindungsgemäßen Parksystems kann das Parksystem ferner mindestens eine an der Einfahrt der Parkvorrichtung angeordnete (unbeschrankte) Zufahrtsvorrichtung ohne physisches Sperrmittel umfassen. Die Einfahrtssignalerfassungseinrichtung kann mindestens einen Empfänger umfassen, eingerichtet zum Bereitstellen eines dritten Erfassungsfelds. Wie bereits beschrieben wurde, kann die erste Kennzeichenbestimmungseinrichtung mindestens eine an der Einfahrt angeordnete Kamera umfassen. Das Erfassungsfeld der Kamera und das dritte Erfassungsfeld können sich zumindest teilweise überlappen.

Gemäß einer weiteren (alternativen) Ausführungsform des erfindungsgemäßen Parksystems kann das Parksystem ferner mindestens eine an der Ausfahrt der Parkvorrichtung angeordnete (unbeschrankte) Zufahrtsvorrichtung ohne physisches Sperrmittel umfassen. Die Ausfahrtssignalerfassungseinrichtung kann mindestens einen Empfänger umfassen, eingerichtet zum Bereitstellen eines vierten Erfassungsfelds. Wie bereits beschrieben wurde, kann die zweite Kennzeichenbestimmungseinrichtung mindestens eine an der Ausfahrt angeordnete Kamera umfassen. Das Erfassungsfeld der Kamera und das vierte Erfassungsfeld können sich zumindest teilweise überlappen.

Ein weiterer Aspekt der Erfindung ist ein Verfahren, insbesondere ein computerimplementiertes Verfahren. Das Verfahren kann insbesondere von der zuvor beschriebenen Datenverarbeitungsvorrichtung ausgeführt werden, insbesondere in einem vorbeschriebenen Parksystem. Das Verfahren umfasst:
- Empfangen, durch ein Empfangsmodul einer Datenverarbeitungsvorrichtung eines Parksystems, eines Einfahrtdatensatzes, enthaltend eine durch eine erste Kennzeichenbestimmungseinrichtung bestimmte Einfahrts-Kennzeichenkette eines in eine Parkvorrichtung einfahrenden Fahrzeugs und mindestens ein durch eine Einfahrtssignalerfassungseinrichtung in einem Einfahrtsbereich der Parkvorrichtung während des Einfahrens des Fahrzeugs erfasstes Einfahrtrohsignal,
- Speichern, durch mindestens ein Speichermodul der Datenverarbeitungsvorrichtung, des empfangenen Einfahrtdatensatzes in einem Datenspeicher,
- Empfangen, durch das Empfangsmodul, eines Ausfahrtdatensatzes, enthaltend eine durch eine zweite Kennzeichenbestimmungseinrichtung bestimmte Ausfahrts-Kennzeichenkette eines aus der Parkvorrichtung ausfahrenden Fahrzeugs und mindestens ein durch eine Ausfahrtssignalerfassungseinrichtung in einem Ausfahrtsbereich der Parkvorrichtung während des Ausfahrens des Fahrzeugs erfasstes Ausfahrtrohsignal,
- Feststellen, durch mindestens ein Auswertemodul der Datenverarbeitungsvorrichtung, eines zu dem empfangenen Ausfahrtdatensatz korrespondierenden Einfahrtdatensatz aus den gespeicherten Einfahrtdatensätzen durch:
   - Vergleichen, in einem ersten Vergleichsschritt, der Ausfahrt-Kennzeichenkette des Ausfahrtdatensatzes mit den jeweiligen Einfahrt-Kennzeichenketten der gespeicherten Einfahrtdatensätze, und/oder
   - Vergleichen, in einem zweiten Vergleichsschritt, (nur) des mindestens einen Ausfahrtrohsignals des Ausfahrtdatensatzes mit dem Einfahrtrohsignal des mindestens einen Einfahrtdatensatzes der gespeicherten Einfahrtdatensätze, welcher diejenige Einfahrt-Kennzeichenkette enthält, die der Ausfahrt-Kennzeichenkette des Ausfahrtdatensatzes am ähnlichsten ist, zumindest dann, wenn in dem ersten Vergleichsschritt keine zur Ausfahrt-Kennzeichenkette identische Einfahrt-Kennzeichenkette ermittelt wurde.

In einer weiteren Ausführungsform des Verfahrens umfasst der Verfahrensschritt des Feststellens die Vergleichsschritte:
- fortlaufendes Vergleichen, in einem ersten Vergleichsschritt, der Ausfahrt-Kennzeichenkette des Ausfahrtdatensatzes mit den jeweiligen Einfahrt-Kennzeichenketten der gespeicherten Einfahrtdatensätze, und Feststellen des korrespondierenden Einfahrtdatensatzes sowie Beenden des ersten Vergleichsschritts, sobald eine gespeicherte Einfahrt-Kennzeichenkette gefunden wurde, die mit der Ausfahrt-Kennzeichenkette identisch ist, oder wenn keine zur Ausfahrt-Kennzeichenkette identische Einfahrt-Kennzeichenkette aus der Gesamtheit aller gespeicherten Einfahrt-Kennzeichenketten ermittelt werden kann, und/ oder
- zumindest dann, wenn in dem ersten Vergleichsschritt keine zur Ausfahrt-Kennzeichenkette identische Einfahrt-Kennzeichenkette ermittelt wurde: Vergleichen, in einem zweiten Vergleichsschritt, des mindestens einen Ausfahrtrohsignals des Ausfahrtdatensatzes mit dem mindestens einen Einfahrtrohsignal des mindestens einen Einfahrtsdatensatz, bevorzugt der mindestens zwei Einfahrtdatensätze, der gespeicherten Einfahrtdatensätze, welche diejenige Einfahrt-Kennzeichenketten enthalten, die der Ausfahrt-Kennzeichenkette des Ausfahrtdatensatzes am ähnlichsten sind, Ermitteln jeweils einer Schnittmenge der jeweiligen Einfahrtrohsignale des mindestens einen Einfahrtsdatensatz, bevorzugt der mindestens zwei Einfahrtdatensätze, mit dem Ausfahrtrohsignal und Feststellen des korrespondierenden Einfahrtdatensatzes anhand der größten ermittelten Schnittmenge.

Ein weiterer Aspekt der Erfindung ist ein Computerprogramm, umfassend Befehle, die bei der Ausführung des Computerprogramms durch mindestens einen Prozessor einer (zuvor beschriebenen) Datenverarbeitungsvorrichtung diesen veranlassen, das zuvor beschriebene Verfahren auszuführen und/oder zu steuern.

Das Computerprogramm, insbesondere die Instruktionen bzw.

Programmanweisungen, können in einem Computerprogrammprodukt gespeichert sein, insbesondere einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann eine Datenverarbeitungsvorrichtung einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der mindestens eine Prozessor der Datenverarbeitungsvorrichtung kann beispielsweise Zwischenergebnisse oder Ähnliches in dem Hauptspeicher speichern.

Die zuvor beschriebenen Module (z.B. Empfangsmodul, Auswertemodul, Datensatzgenerierungsmodul, Freigabemodul, Parkdauerbestimmungsmodul, Abrechnungsmodul, Aktualisierungsmodul etc.) sind vorzugsweise zumindest teilweise Softwareelemente (z.B. ausführbarer Code) und können von einem Prozessor der Datenverarbeitungsvorrichtung ausgeführt werden. Es sei ferner angemerkt, dass Begriffe, wie "erste"; "zweite" etc. nicht eine Reihenfolge angeben, sondern insbesondere zur Unterscheidung zweier Elemente (z.B. Erfassungsfeld, Kennzeichenbestimmungseinrichtung etc.) dienen.

Die Merkmale der Datenverarbeitungsvorrichtungen, Parksysteme, Verfahren und Computerprogramme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die erfindungsgemäße Datenverarbeitungsvorrichtung, das erfindungsgemäße Verfahren, das erfindungsgemäße Computerprogramm und das erfindungsgemäße Parksystem auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. **In** der Zeichnung zeigt:
- Fig. 1: eine schematische Ansicht eines Ausführungsbeispiel einer Datenverarbeitungsvorrichtung gemäß der Erfindung,
- Fig. 2: eine schematische Ansicht eines Ausführungsbeispiel eines Parksystems gemäß der Erfindung mit einem weiteren Ausführungsbeispiel einer Datenverarbeitungsvorrichtung gemäß der Erfindung,
- Fig. 3: ein Diagramm eines Ausführungsbeispiel eines Verfahrens gemäß der Erfindung, und
- Fig. 4: eine schematische Ansicht eines Ausführungsbeispiel eines Einfahrtdatensatzes und eines Ausfahrtdatensatzes gemäß der Erfindung.
Nachfolgend werden für ähnliche Elemente ähnliche Bezugszeichen verwendet.

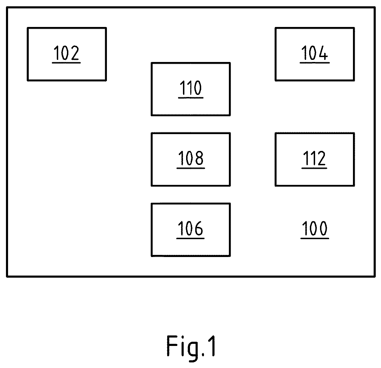

Die Figur 1 zeigt eine schematische Ansicht eines Ausführungsbeispiel einer Datenverarbeitungsvorrichtung 100 gemäß der Erfindung für ein Parksystem. Die Datenverarbeitungsvorrichtung 100 ist insbesondere Bestandteil des (nicht gezeigten) Parksystems und dient dem Betreiben bzw. Steuern des Parksystems. Die Datenverarbeitungsvorrichtung 100 kann beispielsweise durch einen lokalen Rechner, der an der Parkvorrichtung des Parksystems angeordnet ist, und/oder durch ein entfernt von der Parkvorrichtung angeordnetes Hintergrundsystem (beispielsweise ein Server und/oder ein Cloudsystem) des Parksystems gebildet sein.

Die Datenverarbeitungsvorrichtung 100 kann zumindest einen Prozessor 102 und ein Speichermittel 104 umfassen, eingerichtet zum Ausführen von Softwaremodulen, beispielsweise die Module 106, 108, 110, der Datenverarbeitungsvorrichtung 100. Es versteht sich, dass die Datenverarbeitungsvorrichtung 100 weitere Hardwareelemente, wie Eingabemittel, Anzeigenmittel etc., und/oder Softwareelemente umfassen kann.

Die Datenverarbeitungsvorrichtung 100 umfasst mindestens ein Empfangsmodul 106. Das Empfangsmodul 106 ist eingerichtet zum Empfangen eines Einfahrtdatensatzes.

Insbesondere empfängt bzw. erhält das Empfangsmodul 106 eine Vielzahl von Einfahrtdatensätzen. Ein Einfahrtdatensatz bezieht sich auf einen Einfahrvorgang eines Fahrzeugs in die Parkvorrichtung und ist insbesondere mit diesem Fahrzeug verknüpft, insbesondere anhand der Einfahrt-Kennzeichenkette und/oder des mindestens einen erfassten Einfahrtrohsignals, wie insbesondere noch näher erläutert wird.

Ein Einfahrtdatensatz enthält zumindest eine durch eine erste Kennzeichenbestimmungseinrichtung (des Parksystems) bestimmte Einfahrt-Kennzeichenkette, basierend auf einem erfassten Bild des in eine Parkvorrichtung des Parksystems einfahrenden Fahrzeugs, und mindestens ein durch eine Einfahrtssignalerfassungseinrichtung des Parksystems in einem Einfahrtsbereich der Parkvorrichtung während des Einfahrens des Fahrzeugs erfasstes Einfahrtrohsignal, insbesondere eine Mehrzahl von erfassten Einfahrtrohsignalen.

Vorzugsweise kann ein Einfahrtdatensatz mindestens ein weiteres Datum umfassen, wie den Einfahrtszeitpunkt des Fahrzeugs (z.B. Erfassungszeitpunkt des Fahrzeugkennzeichens bzw. der Einfahrt-Kennzeichenkette, Öffnungszeitpunkt eines Sperrelements etc.), die (eindeutige) Kennung der ersten Kennzeichenbestimmungseinrichtung (insbesondere der Kamera), die (eindeutige) Kennung der Einfahrtssignalerfassungseinrichtung (insbesondere des Empfängers) etc.

Die Datenverarbeitungsvorrichtung 100 umfasst mindestens ein Speichermodul 110. Das Speichermodul 110 ist eingerichtet zum Speichern des empfangenen Einfahrtdatensatzes, insbesondere jedes empfangenen Einfahrtdatensatzes, in einem Datenspeicher 112. Beispielsweise kann die Datenverarbeitungsvorrichtung 100 den Datenspeicher 112 umfassen.

Das Empfangsmodul 106 (das aus einer Mehrzahl von Empfängerelementen gebildet sein kann) ist ferner eingerichtet zum Empfangen bzw. Erhalten eines Ausfahrtdatensatzes. Insbesondere empfängt das Empfangsmodul 106 eine Vielzahl von Ausfahrtdatensätzen. Ein Ausfahrtdatensatz bezieht sich auf einen Ausfahrvorgang eines Fahrzeugs aus der Parkvorrichtung heraus und ist insbesondere mit diesem Fahrzeug verknüpft, insbesondere anhand des Fahrzeugkennzeichens des Fahrzeugs und/oder des mindestens einen erfassten Ausfahrtrohsignals, wie insbesondere noch näher erläutert wird.

Der Ausfahrtdatensatz enthält zumindest eine durch eine zweite Kennzeichenbestimmungseinrichtung bestimmte Ausfahrt-Kennzeichenkette, basierend auf einem erfassten Bild eines aus der Parkvorrichtung des Parksystems ausfahrenden Fahrzeugs, und mindestens ein durch eine Ausfahrtssignalerfassungseinrichtung des Parksystems in einem Ausfahrtsbereich der Parkvorrichtung während des Ausfahrens des Fahrzeugs erfasstes Ausfahrtrohsignal, insbesondere eine Mehrzahl von erfassten Ausfahrtrohsignalen.

Vorzugsweise kann ein Ausfahrtdatensatz mindestens ein weiteres Datum umfassen, wie den Ausfahrtszeitpunkt des Fahrzeugs (z.B. Erfassungszeitpunkt des Fahrzeugkennzeichens), die (eindeutige) Kennung der zweiten Kennzeichenbestimmungseinrichtung (insbesondere der Kamera), die (eindeutige) Kennung der Ausfahrtssignalerfassungseinrichtung (insbesondere des Empfängers) etc.

Erfindungsgemäß umfasst die Datenverarbeitungsvorrichtung 100 mindestens ein Auswertemodul 108. Das Auswertemodul 108 ist eingerichtet zum Feststellen eines zu dem empfangenen Ausfahrtdatensatz korrespondierenden Einfahrtdatensatz aus den gespeicherten Einfahrtdatensätzen durch:
- Vergleichen, in einem ersten Vergleichsschritt, der Ausfahrt-Kennzeichenkette des Ausfahrtdatensatzes mit den jeweiligen Einfahrt-Kennzeichenketten der gespeicherten Einfahrtdatensätze, und
- Vergleichen, in einem zweiten Vergleichsschritt, des mindestens einen Ausfahrtrohsignals des Ausfahrtdatensatzes mit dem Einfahrtrohsignal des mindestens einen Einfahrtdatensatzes der gespeicherten Einfahrtdatensätze, welcher diejenige Einfahrt-Kennzeichenkette enthält, die der Ausfahrt-Kennzeichenkette des Ausfahrtdatensatzes am ähnlichsten ist, zumindest dann, wenn in dem ersten Vergleichsschritt keine zur Ausfahrt-Kennzeichenkette identische Einfahrt-Kennzeichenkette ermittelt wurde.

Das Auswertemodul 108 ist insbesondere eingerichtet zum Durchführen des zweiten Vergleichsschritts nur dann, wenn in dem ersten Vergleichsschritt keine zur Ausfahrt-Kennzeichenkette identische Einfahrt-Kennzeichenkette ermittelt wurde.

Optional kann die Datenverarbeitungsvorrichtung 100, insbesondere dann, wenn das Parksystem einen ersten und einen zweiten Empfänger umfasst, ein Datensatzvereinheitlichungsmodul 107 umfassen, das eingerichtet sein kann
- zum Empfangen der durch die erste Kennzeichenbestimmungseinrichtung bestimmten Einfahrts-Kennzeichenkette eines in eine Parkvorrichtung des Parksystems einfahrenden Fahrzeugs,
- zum Empfangen des mindestens einen durch den ersten Empfänger in einem ersten Erfassungsfeld während des Einfahrens des Fahrzeugs vor dem Sperrmittel erfassten ersten Einfahrtrohsignals,
- zum Empfangen mindestens eines durch den zweiten Empfänger in einem zweiten Erfassungsfeld während des Einfahrens des Fahrzeugs hinter dem Sperrmittel erfassten zweiten Einfahrtrohsignals und
- zum Generieren des Einfahrtdatensatzes, enthaltend als Einfahrt-Kennzeichenkette die Einfahrts-Kennzeichenkette des ersten Einfahrtdatensatzes und als Einfahrtrohsignal die Schnittmenge des mindestens einen erfassten ersten Einfahrtrohsignals und des mindestens einen erfassten zweiten Einfahrtrohsignals.

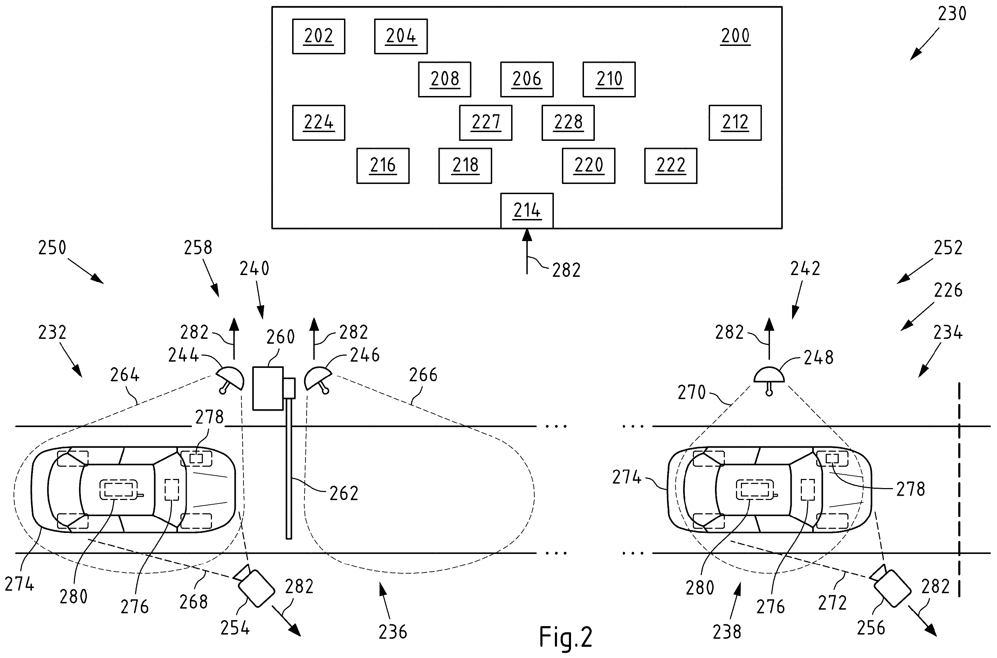

Die Figur 2 zeigt eine schematische Ansicht eines Ausführungsbeispiel eines Parksystems 230 gemäß der Erfindung mit einem weiteren Ausführungsbeispiel einer Datenverarbeitungsvorrichtung 200 gemäß der Erfindung. Zur Vermeidung von Wiederholungen werden nachfolgend im Wesentlichen die Unterschiede zu dem vorherigen Ausführungsbeispiel beschrieben und ansonsten auf die Ausführungen zur Figur 1 verwiesen.

Das Parksystem 230 umfasst insbesondere eine Parkvorrichtung, die lediglich zu Gunsten einer besseren Übersicht nicht in der Figur 2 dargestellt ist. Die Parkvorrichtung, wie ein Parkplatz, ein Parkhaus etc., dient dazu, dass Nutzer ihr Fahrzeug auf einem Stellplatz der Parkvorrichtung (temporär) abstellen können. Ein entsprechender Vorgang wird insbesondere als Parkvorgang bezeichnet.

Vorzugsweise kann mindestens eine Einfahrt 232 und mindestens eine Ausfahrt 234 vorgesehen sein. Ein Fahrzeug 274 kann über die mindestens eine Einfahrt 232 (der Parkvorrichtung) in die Parkvorrichtung einfahren. Ferner kann ein Fahrzeug 274 über die mindestens eine Ausfahrt 234 (der Parkvorrichtung) aus der Parkvorrichtung ausfahren.

Vorzugsweise kann das Parksystem 230 eine an der Einfahrt 232 angeordnete (beschrankte) Zufahrtsvorrichtung 258 mit einem Sperrmittel 260, 262 umfassen. Vorliegend ist beispielhaft als Sperrmittel 260, 262 ein an einer Basis 260 zwischen einer geöffneten Position und einer geschlossenen Position bewegbarer Schrankenbaum 262 vorgesehen. Es versteht sich, dass bei Varianten der Erfindung andere Sperrmittel vorgesehen sein können oder eine Zufahrtsvorrichtung ohne (physisches) Sperrmittel.

Fener kann das Parksystem 230 eine an der Ausfahrt 234 (unbeschrankte) Zufahrtsvorrichtung 226 ohne (physisches) Sperrmittel umfassen. Es versteht sich, dass bei Varianten der Erfindung auch eine Zufahrtsvorrichtung mit einem Sperrmittel vorgesehen sein kann.

Neben der mindestens einen Datenverarbeitungsvorrichtung 200 umfasst das Parksystem 230 mindestens eine erste Kennzeichenbestimmungseinrichtung 250, eingerichtet zum Bestimmen einer Einfahrt-Kennzeichenkette eines in eine Parkvorrichtung einfahrenden Fahrzeugs 274. Die erste Kennzeichenbestimmungseinrichtung 250 umfasst mindestens eine Kamera 254. Die Kamera 254 kann an der Einfahrt 232 angeordnet sein. Insbesondere kann die Kamera 254 derart an der Einfahrt 232 angeordnet sein, dass das Fahrzeugkennzeichen eines durch den Einfahrtsbereich 236 (z.B. vor dem Sperrelement 260, 262) fahrendes Fahrzeugs 274 den Erfassungsbereich 268 der Kamera passiert, insbesondere stets passieren muss.

Die erste Kennzeichenbestimmungseinrichtung 250 kann ferner mindestens ein Bildauswertemodul 216 umfassen. Beispielsweise kann das Bildauswertemodul 216 als durch Prozessor 202 und Speichermittel 204 ausführbares Softwaremodul in der Datenverarbeitungsvorrichtung 200 implementiert sein. Über ein (drahtloses und/oder drahtgebundenes) Datenkommunikationsnetz 282 können erfasste Bilddaten von der Kamera 254 an ein Kommunikationsmodul 214 der Datenverarbeitungsvorrichtung 200 übertragen und insbesondere dem Bildauswertemodul 216 bereitgestellt werden.

Die erste Kennzeichenbestimmungseinrichtung 250 kann insbesondere eine LPR-Kennzeichenbestimmungseinrichtung sein. Bei einer LPR-Kennzeichenbestimmungseinrichtung wird das mittels der Kamera 254 erfasste Bild des Fahrzeugkennzeichens durch das Bildauswertemodul 216 insbesondere mittels OCR (Optical Character Recognition) ausgewertet, um die Kennzeichenkette zu ermitteln.

Es versteht sich, dass insbesondere bei einer Einfahrt mit einer Mehrzahl von Fahrspuren eine entsprechende Mehrzahl an Kameras vorgesehen sein kann.

Das Parksystem 230 umfasst mindestens eine zweite Kennzeichenbestimmungseinrichtung 252, eingerichtet zum Bestimmen einer Ausfahrt-Kennzeichenkette eines aus der Parkvorrichtung ausfahrenden Fahrzeugs 274. Die zweite Kennzeichenbestimmungseinrichtung 252 umfasst mindestens eine Kamera 256. Die Kamera 256 kann an der Ausfahrt 234 angeordnet sein. Insbesondere kann die Kamera 256 derart an der Ausfahrt 234 angeordnet sein, dass das Fahrzeugkennzeichen eines in einem Ausfahrtsbereich 238 ausfahrendes Fahrzeugs 274 den Erfassungsbereich 272 der Kamera 256 passiert, insbesondere stets passieren muss.

Die zweite Kennzeichenbestimmungseinrichtung 252 kann ferner mindestens ein Bildauswertemodul 216 umfassen. Beispielsweise kann das Bildauswertemodul 216 (als durch Prozessor 202 und Speichermittel 204 ausführbares Softwaremodul) in der Datenverarbeitungsvorrichtung 200 implementiert sein. Insbesondere können sich die erste und zweite Kennzeichenbestimmungseinrichtung 250, 252 ein gemeinsames Bildauswertemodul 216 teilen.

Über das Datenkommunikationsnetz 282 können erfasste Bilddaten von der Kamera 256 an das Kommunikationsmodul 214 der Datenverarbeitungsvorrichtung 200 übertragen und insbesondere dem Bildauswertemodul 216 bereitgestellt werden. Die zweite Kennzeichenbestimmungseinrichtung 252 kann insbesondere eine LPR-Kennzeichenbestimmungseinrichtung sein, wie die erste Kennzeichenbestimmungseinrichtung.

Erfindungsgemäß umfasst das Parksystem 230 mindestens eine Einfahrtssignalerfassungseinrichtung 240. Die Einfahrtssignalerfassungseinrichtung 240 umfasst mindestens einen (elektromagnetischen) Empfänger 244, 246. Die Einfahrtssignalerfassungseinrichtung 240 ist eingerichtet zum Erfassen mindestens eines Einfahrtrohsignals in dem Einfahrtsbereich 236 während des Einfahrens des Fahrzeugs 274.

Der mindestens eine Empfänger 244, 246 stellt vorzugsweise mindestens ein Erfassungsfeld 264, 266 bereit. Das mindestens eine Erfassungsfeld 264, 266 kann insbesondere den Einfahrtsbereich 236 bilden bzw. abdecken. Die Einfahrtssignalerfassungseinrichtung 240 ist insbesondere eingerichtet, mindestens ein erwartbares Rohsignal zu erfassen, das von Signalquellen 276, 278, 280 ausgesendet wird, die sich in dem Einfahrtsbereich 236 bzw. dem mindestens einen Erfassungsfeld 264, 266 befinden. Insbesondere kann davon ausgegangen werden, dass das erfasste mindestens eine Rohsignal beim Einfahren des Fahrzeugs 274 von Signalquellen 276, 278, 280 stammt, die sich in und/oder an dem Fahrzeug 274 befinden, wie ein mobiles Endgerät 276 eines Nutzers des Fahrzeugs 274, ein Radsensor 278 des Fahrzeugs 274 und/oder ein Entertainmentsystem 280 und/oder eine Car-2-X-Schnittstelle des Fahrzeugs 274. Es versteht sich, dass bei anderen Varianten der Erfindung mehr oder weniger Signalquellen vorhanden sein können.

Vorliegend sind beispielhaft zwei Empfänger 244, 246 vorgesehen. Vorzugsweise kann der erste Empfänger 244 eingerichtet sein zum Bereitstellen eines ersten Erfassungsfelds 264 in einer Durchfahrtsrichtung (gesehen) vor dem Sperrmittel 262 (z.B. vor dem Schrankenbaum) und der zweite Empfänger 246 zum Bereitstellen eines zweiten Erfassungsfelds 266 in Durchfahrtsrichtung (gesehen) hinter dem Sperrmittel 262 (z.B. hinter dem Schrankenbaum). Die Empfänger 244, 246 können gerichtete Empfänger sein, beispielsweis mit einer (nicht gezeigten) Abschirmung zwischen den Empfängern 244, 246. Beispielsweise können nun Daten aus ersten Signalen des ersten Empfängers 244, die in dem ersten Erfassungsfeld 264 vor dem Sperrmittel 262 erfasst wurden, und Daten aus zweiten Signalen des zweiten Empfängers 246, die in die in dem zweiten Erfassungsfeld 266 hinter dem Sperrmittel 262 erfasst wurden, berücksichtigt werden zum Bilden eines Einfahrtrohsignals. Das Einfahrtrohsignal kann also gebildet werden aus einer Schnittmenge der Daten, die im ersten Signal (vor dem Sperrmittel 262) erfasst wurden, und der Daten, die im zweiten Signal (nach dem Sperrmittel 262) erfasst wurden. Insbesondere kann das Einfahrtrohsignal gebildet werden aus der größten Schnittmenge der Daten, die im ersten Signal (vor dem Sperrmittel 262) erfasst wurden, und der Daten, die im zweiten Signal (nach dem Sperrmittel 262) erfasst wurden. Damit kann insbesondere sichergestellt werden, dass die Daten im Einfahrtsrohsignal von Datenquellen stammen, die sich tatsächlich in oder an dem einfahrenden Fahrzeug befinden.

Der Erfassungsbereich 268 der Kamera 254 und das mindestens eine Erfassungsfeld 264, 266 können sich zumindest teilweise überlappen.

Insbesondere können die Bilddaten eines Fahrzeugs 274 und die von diesem Fahrzeug 274 stammenden Einfahrtrohsignale zeitsynchron erfasst werden, also insbesondere während des Einfahrens des Fahrzeugs 274. Vorzugsweise können die erfassten Bilddaten und die erfassten Einfahrtrohsignale jeweils mit Erfassungszeiten versehen sein. Anhand der Erfassungszeiten können dann das aus den Bilddaten ermittelte Einfahrt-Kennzeichenketten und die erfassten Einfahrtrohsignale einander zugeordnet werden, um insbesondere den Einfahrtdatensatz (zu dem Fahrzeug 274) zu bilden. Beispielsweise kann die Datenverarbeitungsvorrichtung 200 ein (durch Prozessor 202 und Speichermittel 204 ausführbares) Datensatzgenerierungsmodul 218 umfassen, eingerichtet zum Generieren der Einfahrtdatensätze. Diese können dem Empfangsmodul 206 bereitgestellt und durch das Speichermodul 210 in dem Datenspeicher 212 abgespeichert werden.

Darüber hinaus umfasst das Parksystem 230 mindestens eine Ausfahrtssignalerfassungseinrichtung 242, eingerichtet zum Erfassen mindestens eines Ausfahrtrohsignals in dem Ausfahrtsbereich 238 der Parkvorrichtung während des Ausfahrens des Fahrzeugs 274.

Die Ausfahrtssignalerfassungseinrichtung 242 umfasst mindestens einen (elektromagnetischen) Empfänger 248. Der mindestens eine Empfänger 248 stellt vorzugsweise mindestens ein Erfassungsfeld 270 bereit. Das mindestens eine Erfassungsfeld 270 kann insbesondere den Ausfahrtsbereich 238 bilden bzw. abdecken. Die Ausfahrtssignalerfassungseinrichtung 242 ist insbesondere eingerichtet, mindestens ein erwartbares Rohsignal zu erfassen, das von Signalquellen 276, 278, 280 ausgesendet wird, die sich in dem Ausfahrtsbereich 238 bzw. dem mindestens einen Erfassungsfeld 270 befinden. Insbesondere kann davon ausgegangen werden, dass das erfasste mindestens eine Rohsignal beim Ausfahren des Fahrzeugs 274 von Signalquellen 276, 278, 280 stammt, die sich in und/oder an dem Fahrzeug 274 befinden, wie ein mobiles Endgerät 276 eines Nutzers des Fahrzeugs 274, ein Radsensor 278 des Fahrzeugs 274 und/oder ein Entertainmentsystem 280 des Fahrzeugs 274 und/oder eine Car-2-Schnittstelle des Fahrzeugs. Es versteht sich, dass bei anderen Varianten der Erfindung mehr oder weniger Sendequellen vorhanden sein können.

Vorliegend ist beispielhaft ein (gerichteter) Empfänger 248 vorgesehen. Der Erfassungsbereich 272 der Kamera 256 und das mindestens eine Erfassungsfeld 270 können sich zumindest teilweise überlappen.

Insbesondere können die Bilddaten eines Fahrzeugs 274 und die von diesem Fahrzeug 274 stammenden Ausfahrtrohsignale zeitsynchron erfasst werden, also insbesondere während des Ausfahrens des Fahrzeugs 274. Vorzugsweise können die erfassten Bilddaten und die erfassten Einfahrtrohsignale jeweils mit Erfassungszeiten versehen sein. Anhand der Erfassungszeiten können dann das aus den Bilddaten ermittelte Ausfahrt-Kennzeichenketten und die erfassten Ausfahrtrohsignale einander zugeordnet werden, um insbesondere den Ausfahrtdatensatz (zu dem Fahrzeug 274) zu bilden. Beispielsweise kann die Datenverarbeitungsvorrichtung 200 ein (durch Prozessor 202 und Speichermittel 204 ausführbares) Datensatzgenerierungsmodul 218 umfassen, eingerichtet zum Generieren der Ausfahrtdatensätze. Diese können dem Empfangsmodul 206 bereitgestellt und durch das Auswertemodul 208 ausgewertet werden.

Weiterhin umfasst die Datenverarbeitungsvorrichtung 200 optional mindestens ein (durch Prozessor 202 und Speichermittel 204 ausführbares) Freigabemodul 220, eingerichtet zum Freigeben einer in dem Ausfahrtsbereich 238 angeordneten Zufahrtsvorrichtung, zumindest basierend auf dem Auswerteergebnis des Auswertemoduls 208. Beispielsweise kann eine (nicht gezeigte) Lichtsignalvorrichtung (z.B. eine Ampel) durch das Freigabemodul 220 angesteuert werden, basierend auf dem Auswerteergebnis. Bei anderen Varianten der Erfindung, bei denen an der Ausfahrt eine Zufahrtsvorrichtung mit Sperrmittel vorgesehen ist, kann durch das Freigabemodul ein Ansteuern des Aktors des Sperrmittels erfolgen.

Wie bereits beschrieben wurde, kann der Einfahrtdatensatz einen Einfahrtszeitpunkt des Fahrzeugs 274 enthalten. Die Datenverarbeitungsvorrichtung 200 kann optional ein (durch Prozessor 202 und Speichermittel 204 ausführbares) Parkdauerbestimmungsmodul 222 umfassen, eingerichtet zum Bestimmen der Parkdauer des Fahrzeugs 274, basierend auf dem Einfahrtszeitpunkt des Fahrzeugs und einem bereitgestellten (beispielsweise durch den Ausfahrtdatensatz) Ausfahrtszeitpunkt des Fahrzeugs 274. Optional kann ein (durch Prozessor 202 und Speichermittel 204 ausführbares) Abrechnungsmodul 224 vorgesehen sein, eingerichtet zum Abrechnen des Parkvorgangs, basierend auf der bestimmten Parkdauer des Fahrzeugs 274 (und insbesondere in bekannter Weise).

Ferner kann die Datenverarbeitungsvorrichtung 200 mindestens eine optionale Nutzerdatenbank 227 umfassen, eingerichtet zum Speichern von Nutzerdatensätzen, enthaltend jeweils zumindest mindestens eine Nutzerkennung, ein Fahrzeugkennzeichen, insbesondere das wahre Fahrzeugkennzeichen aus einem Registrierungsvorgang eines Nutzers, und mindestens ein Datenfeld zum Speichern von Rohsignaldatensätzen. Die Datenverarbeitungsvorrichtung 200 kann mindestens ein (durch Prozessor 202 und Speichermittel 204 ausführbares) optionales Aktualisierungsmodul 228 umfassen, eingerichtet zum Hinzufügen des mindestens einen erfassten Einfahrtrohsignals und/oder des mindestens einen erfassten Ausfahrtrohsignals zu dem Rohsignaldatensatz.

Das Auswertemodul 208 kann optional eingerichtet sein zum Feststellen eines zu dem empfangenen Ausfahrtdatensatz korrespondierenden Nutzerdatensatz aus den gespeicherten Einfahrtdatensätzen durch:
- Vergleichen, in einem dritten Vergleichsschritt, der Ausfahrt-Kennzeichenkette des Ausfahrtdatensatzes mit den jeweiligen Fahrzeugkennzeichen der gespeicherten Nutzerdatensätze, und
- Vergleichen, in einem vierten Vergleichsschritt, (nur, ohne ein Decodieren) des mindestens einen Ausfahrtrohsignals des Ausfahrtdatensatzes mit dem mindestens einen Rohsignaldatensatz des Nutzerdatensatzes der gespeicherten Nutzerdatensätze, welcher das Fahrzeugkennzeichen enthält, das der Ausfahrt-Kennzeichenkette des Ausfahrtdatensatzes am ähnlichsten ist, zumindest dann, wenn in dem dritten Vergleichsschritt kein zur Ausfahrt-Kennzeichenkette identisches Fahrzeugkennzeichen ermittelt wurden.

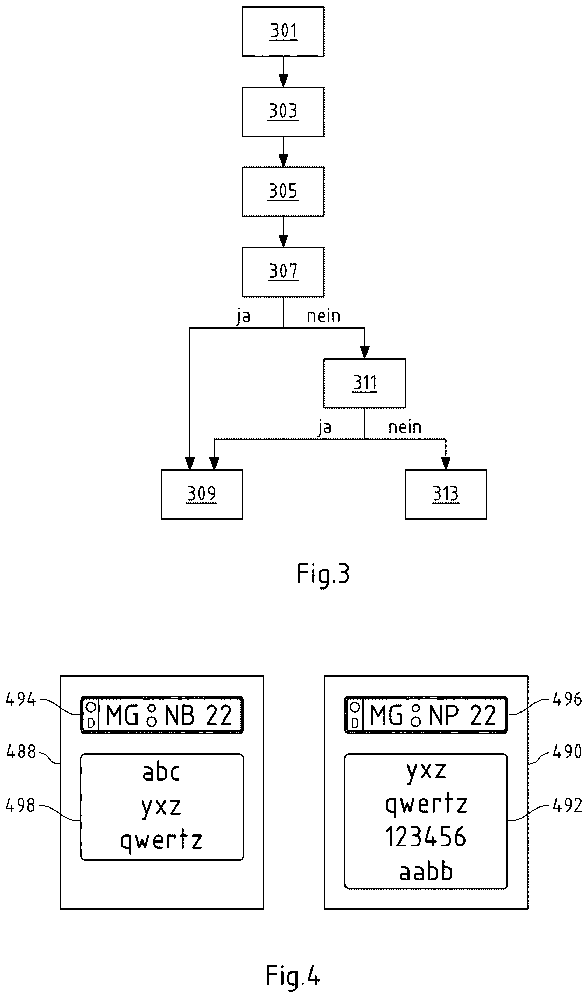

Die Funktionsweise der Datenverarbeitungsvorrichtung 100, 200, beispielsweise nach Figur 1 und/oder 2, und insbesondere der Betrieb des Parksystems 230 nach Figur 2 wird näher mittels der Figuren 3 und 4 beschrieben.

Die Figur 3 zeigt ein Diagramm eines Ausführungsbeispiel eines bevorzugten Verfahrens gemäß der Erfindung. Die Figur 4 zeigt eine schematische Ansicht eines Ausführungsbeispiels eines Einfahrtdatensatzes 488 und eines Ausfahrtdatensatzes 490 gemäß der Erfindung.

Der Einfahrtdatensatz 488 enthält eine durch die erste Kennzeichenbestimmungseinrichtung bestimmte Einfahrt-Kennzeichenkette 494 des in die Parkvorrichtung des Parksystems einfahrenden Fahrzeugs und mindestens ein durch eine Einfahrtssignalerfassungseinrichtung in einem Einfahrtsbereich der Parkvorrichtung während des Einfahrens des Fahrzeugs erfasstes Einfahrtrohsignal 498. Vorliegend wurden beispielhaft drei Einfahrtrohsignale erfasst. Wie beschrieben, kann bei anderen Varianten der Erfindung mindestens ein weiteres Datum vorhanden sein.

Der Ausfahrtdatensatz 490 enthält eine durch die zweite Kennzeichenbestimmungseinrichtung bestimmte Ausfahrt-Kennzeichenkette 496 des aus der Parkvorrichtung ausfahrenden Fahrzeugs und mindestens ein durch eine Ausfahrtssignalerfassungseinrichtung in dem Ausfahrtsbereich der Parkvorrichtung während des Ausfahrens des Fahrzeugs erfasstes Ausfahrtrohsignal 492. Vorliegend wurden beispielhaft vier Ausfahrtrohsignale erfasst.

Ferner ist dem Beispiel nach Figur 4 zu entnehmen, dass anstelle von "NB" in der Einfahrt-Kennzeichenkette 494 des Einfahrtdatensatzes 488 beim Ausfahrtdatensatz 490 in der Ausfahrt-Kennzeichenkette 496 "NP" bestimmt wurde. **Im** Stand der Technik würde dies zu einem Fehler führen, da keine Zuordnung zwischen dem Einfahrtdatensatz 488 und dem Ausfahrtdatensatz 490 erfolgen würde. Erfindungsgemäß erfolgt eine (zuverlässige) Zuordnung der Datensätze 488 und 490 zueinander, wie insbesondere mittels der Figur 3 näher erläutert wird.

In einem ersten Schritt 301 erfolgt ein Empfangen, durch das Empfangsmodul der Datenverarbeitungsvorrichtung, eines Einfahrtdatensatzes 488, enthaltend eine durch eine erste Kennzeichenbestimmungseinrichtung bestimmte Einfahrt-Kennzeichenkette eines in eine Parkvorrichtung einfahrenden Fahrzeugs und mindestens ein durch eine Einfahrtssignalerfassungseinrichtung in einem Einfahrtsbereich der Parkvorrichtung während des Einfahrens des Fahrzeugs erfasstes Einfahrtrohsignal, wie insbesondere zuvor beschrieben wurde.

Insbesondere können eine Einfahrt-Kennzeichenkette, basierend auf Bilddaten von dem Fahrzeugkennzeichen des Fahrzeugs, und Einfahrtrohsignale von Signalquellen, die sich in oder an diesem Fahrzeug befinden, während des Durchfahrens des Einfahrtsbereich durch das genannte Fahrzeug erfasst werden und insbesondere dem Datensatzgenerierungsmodul bereitgestellt werden. Der durch das Datensatzgenerierungsmodul generierte Einfahrtdatensatz 488 kann nach dem Empfangen durch das Empfangsmodul in Schritt 301 in dem Schritt 303 gespeichert werden. In Schritt 303 erfolgt ein Speichern, durch mindestens ein Speichermodul der Datenverarbeitungsvorrichtung, des empfangenen Einfahrtdatensatzes 488 in einem Datenspeicher.

In einem weiteren Schritt 305 (insbesondere nach der Beendigung des Parkvorgangs des eingefahrenen Fahrzeugs) erfolgt ein Empfangen, durch das Empfangsmodul, eines Ausfahrtdatensatzes 490, enthaltend eine durch eine zweite Kennzeichenbestimmungseinrichtung bestimmte Ausfahrt-Kennzeichenkette eines aus der Parkvorrichtung ausfahrenden Fahrzeugs und mindestens ein durch eine Ausfahrtssignalerfassungseinrichtung in einem Ausfahrtsbereich der Parkvorrichtung während des Ausfahrens des Fahrzeugs erfasstes Ausfahrtrohsignal, wie insbesondere zuvor beschrieben wurde.

In einem nächsten Schritt 307 erfolgt ein Feststellen, durch das mindestens eine Auswertemodul der Datenverarbeitungsvorrichtung, eines zu dem empfangenen Ausfahrtdatensatz 490 korrespondierenden Einfahrtdatensatzes 488 aus den gespeicherten Einfahrtdatensätzen durch ein (in Schritt 307durchgeführtes) Vergleichen, in einem ersten Vergleichsschritt, der Ausfahrt-Kennzeichenkette des Ausfahrtdatensatzes mit den Einfahrt-Kennzeichenketten der gespeicherten Einfahrtdatensätze.

Wenn in dem ersten Vergleichsschritt festgestellt wird, dass die verglichenen Kennzeichenketten identisch sind, stellt das Auswertemodul fest, dass der empfangene Ausfahrtdatensatz 490 zu einem Einfahrtdatensatz 488 aus den gespeicherten Einfahrtdatensätzen korrespondiert. Mit anderen Worten, es wird festgestellt in Schritt 309, dass der Einfahrtdatensatz 488 und der Ausfahrtdatensatz 490 von demselben Fahrzeug stammen. Einfahrtdatensatz 488 und Ausfahrtdatensatz 490 werden einander zugeordnet.

Wie bereits beschrieben wurde, kann optional eine Parkdauer bestimmt werden, eine Freigabe der Zugangsvorrichtung der Ausfahrt bewirkt werden, eine Abrechnung erfolgen und/oder dergleichen.

Wenn in dem ersten Vergleichsschritt in Schritt 307 keine Identität festgestellt wird (wie in dem Ausführungsbeispiel nach Figur 4 beispielhaft gezeigt), wird das Verfahren mit Schritt 311 fortgesetzt.

In Schritt 311 erfolgt ein Vergleichen, in einem zweiten Vergleichsschritt, (nur) des mindestens einen Ausfahrtrohsignals des (empfangenen) Ausfahrtdatensatzes 490 mit dem Einfahrtrohsignal des mindestens einen Einfahrtdatensatzes 488 der gespeicherten Einfahrtdatensätze, welcher diejenige Einfahrt-Kennzeichenkette enthält, die der Ausfahrt-Kennzeichenkette des Ausfahrtdatensatzes 490 am ähnlichsten ist, zumindest dann, vorzugsweise nur dann, wenn in dem ersten Vergleichsschritt (siehe Schritt 307) zur Ausfahrt-Kennzeichenkette keine identische Einfahrt-Kennzeichenkette ermittelt wurde.

Besonders bevorzugt wird in Schritt 311 zunächst ein Zwischenschritt durchgeführt, um zumindest den Einfahrtdatensatz 488 zu ermitteln, dessen Einfahrt-Kennzeichenkette der Ausfahrt-Kennzeichenkette des Ausfahrtdatensatz 490 am ähnlichsten ist. Bei Varianten der Erfindung können die Einfahrtdatensätze mit den x-ähnlichsten Fahrzeugkennungen ermittelt werden.

Zum Ermitteln des genannten Einfahrtdatensatzes 488 bzw. der ähnlichsten Kennzeichenkette kann das Auswertemodul eingerichtet sein zum Bestimmen eines Ähnlichkeitsfaktors zwischen zwei in dem ersten Vergleichsschritt verglichenen Kennzeichenketten 494, 496. Insbesondere kann die Ausfahrt-Kennzeichenkette 496 des Ausfahrtdatensatzes 490 mit sämtlichen in den gespeicherten Einfahrtdatensätzen vorhandenen Einfahrt-Kennzeichenketten 494 verglichen werden, um den jeweiligen Ähnlichkeitsfaktor zu bestimmen. Das Bestimmen des jeweiligen Ähnlichkeitsfaktors erfolgt insbesondere basierend auf einem Messen einer jeweiligen Levenshtein-Distanz zwischen den verglichenen Kennzeichenketten 494, 496. Bei dem Ausführungsbeispiel nach Figur 4 ist die bestimmte Levenshtein-Distanz zwischen den verglichenen Kennzeichenketten 494, 496 gleich 1.

Das Auswertemodul kann eingerichtet sein zumindest zum Bestimmen der Kennzeichenketten, die sich am ähnlichsten sind, basierend auf den jeweils bestimmten Ähnlichkeitsfaktoren.

Vorzugsweise kann das Auswertemodul eingerichtet sein zum dynamischen Bestimmen eines Übereinstimmungskriterium, basierend auf dem Ähnlichkeitsfaktor der Kennzeichenketten 494, 496, die sich am ähnlichsten sind. Je unähnlicher sich die Kennzeichenketten 494, 496 sind (beispielsweise je größer die Levenshtein-Distanz ist), desto höher muss die Übereinstimmung des mindestens einen Einfahrtrohsignals 498 und des mindestens einen Ausfahrtrohsignals 492 sein.

Erfindungsgemäß kann eine Zuordnung des Ausfahrtdatensatzes 490 zu einem Einfahrtdatensatz 488 auch dann erfolgen, wenn in dem ersten Vergleichsschritt keine Identität der Kennzeichenketten festgestellt wird, jedoch das mindestens eine Einfahrtrohsignal 498 des Einfahrtdatensatzes 488 mit der Einfahrt-Kennzeichenkette 494, die der Ausfahrt-Kennzeichenkette 496 des Ausfahrtdatensatzes 490 am ähnlichsten ist, und das mindestens eine Ausfahrtrohsignal 492 des Ausfahrtdatensatzes 490 das mindestens eine Übereinstimmungskriterium erfüllen.

Das Übereinstimmungskriterium gibt insbesondere an, wann zwischen dem mindestens einen Einfahrtrohsignal 498 und dem mindestens einen Ausfahrtrohsignal 490 eine ausreichende Übereinstimmung vorhanden ist, so dass sichergestellt ist, dass der Einfahrtdatensatz 488 und der Ausfahrtdatensatz 490 von demselben Fahrzeug stammen. Das Vergleichen des mindestens einen Einfahrtrohsignals 498 mit dem mindestens einen Ausfahrtrohsignal 492 in dem zweiten Vergleichsschritt (Schritt 311) kann insbesondere ein Bestimmen der übereinstimmenden Signalteile (z.B. ein (reiner) Vergleich der jeweiligen Bitstreams) umfassen. Insbesondere ist erkannt worden, dass sich Teile der Payload, die von einer Signalquelle ausgesendet wird, zumindest teilweise im Verlaufe der Zeit ändern kann, also insbesondere zwischen der Einfahrtzeit und Ausfahrtzeit. Auch kann die Anzahl an Einfahrtrohsignalen mit der Anzahl an Ausfahrtrohsignalen verglichen werden.

Vorliegend kann das Auswertemodul bei einem Vergleich der genannten Rohsignale 498, 492 beispielsweise auf einen Übereinstimmungswert von 40 % kommen. Der dynamisch bestimmte Übereinstimmungsgrenzwert des Übereinstimmungskriteriums kann aufgrund des bestimmten Ähnlichkeitsfaktors bei z.B. 35 % liegen. Daher kann das Auswertemodul in dem vorliegenden Beispiel feststellen, dass der empfangenen Ausfahrtdatensatz 490 zu dem Einfahrtdatensatz 488 korrespondiert. Es kann mit Schritt 309 fortgefahren werden.

In einer weiteren Ausführungsform kann im zweiten Vergleichsschritt 311 jeweils eine Schnittmenge der jeweiligen Einfahrtrohsignale 498 mit dem Ausfahrtrohsignal 492 gebildet werden, und der zum Ausfahrtdatensatz 490 korrespondierende Einfahrtdatensatz 488 kann aus der Gesamtheit aller Einfahrtdatensätze ermittelt werden als derjenige, dessen Einfahrtsrohsignal 498 die größte jeweilige Schnittmenge bildet mit dem Ausfahrtrohsignal 492 des Ausfahrtdatensatze 490. In Fig. 4 hat die größte Schnittmenge des gezeigten Einfahrtrohsignals 498 und des gezeigten Ausfahrtrohsignals 492 den Wert 5: Die längste übereinstimmende Zeichenfolge "qwertz" ist 5 Zeichen lang. Wenn im zweiten Vergleichsschritt 311 keine andere Paarung zwischen dem Ausfahrtrohsignal 492 und der Gesamtheit der gespeicherten Einfahrtrohsignale gefunden werden kann, deren Schnittmenge größer oder gleich 5 ist, dann kann das Auswertemodul in dem vorliegenden Beispiel feststellen, dass der empfangenen Ausfahrtdatensatz 490 zu dem Einfahrtdatensatz 488 korrespondiert. Es kann mit Schritt 309 fortgefahren werden.

Wenn durch das Auswertemodul festgestellt wird, dass das Übereinstimmungskriterium nicht erfüllt ist, kann mit Schritt 313 fortgefahren werden, in dem eine Zuordnung unterbleibt und beispielsweise eine entsprechende Fehlermeldung ausgegeben wird. Anschließend können Maßnahmen zur Behebung des Problems beispielsweise durch einen Mitarbeiter des Parksystembetreibers veranlasst werden.

### Bezugszeichenliste:

- 100: Datenverarbeitungsvorrichtung
- 102: Prozessor
- 104: Speichermittel
- 106: Empfangsmodul
- 107: Datensatzvereinheitlichungsmodul
- 108: Auswertemodul
- 110: Speichermodul
- 112: Datenspeicher
- 200: Datenverarbeitungsvorrichtung
- 202: Prozessor
- 204: Speichermittel
- 206: Empfangsmodul
- 207: Datensatzvereinheitlichungsmodul
- 208: Auswertemodul
- 210: Speichermodul
- 212: Datenspeicher
- 214: Kommunikationsmodul
- 216: Bildauswertemodul
- 218: Datensatzgenerierungsmodul
- 220: Freigabemodul
- 222: Parkdauerbestimmungsmodul
- 224: Abrechnungsmodul
- 226: Zufahrtsvorrichtung
- 227: Nutzerdatenbank
- 228: Aktualisierungsmodul
- 230: Parksystem
- 232: Einfahrt
- 234: Ausfahrt
- 236: Einfahrtsbereich
- 238: Ausfahrtsbereich
- 240: Einfahrtssignalerfassungseinrichtung
- 242: Ausfahrtssignalerfassungseinrichtung
- 244: Empfänger
- 246: Empfänger
- 248: Empfänger
- 250: Kennzeichenbestimmungseinrichtung
- 252: Kennzeichenbestimmungseinrichtung
- 254: Kamera
- 256: Kamera
- 258: Zufahrtsvorrichtung
- 260: Basis
- 262: Schrankenbaum
- 264: Erfassungsfeld
- 266: Erfassungsfeld
- 268: Erfassungsbereich
- 270: Erfassungsfeld
- 272: Erfassungsbereich
- 274: Fahrzeug
- 276: mobiles Endgerät
- 278: Radsensor
- 280: Entertainmentsystem
- 282: Datenkommunikationsnetz
- 301: Schritt
- 303: Schritt
- 305: Schritt
- 307: Schritt
- 309: Schritt
- 311: Schritt
- 313: Schritt
- 488: Einfahrtdatensatz
- 490: Ausfahrtdatensatz
- 492: Ausfahrtrohsignal
- 494: Einfahrts-Kennzeichenkette
- 496: Ausfahrts-Kennzeichenkette
- 498: Einfahrtrohsignal

## Patentansprüche

1. Datenverarbeitungsvorrichtung (100, 200) für ein Parksystem (230), umfassend:
- mindestens ein Empfangsmodul (106, 206), eingerichtet zum Empfangen eines Einfahrtdatensatzes (488), enthaltend eine durch eine erste Kennzeichenbestimmungseinrichtung (250) bestimmte Einfahrts-Kennzeichenkette (494) eines in eine Parkvorrichtung des Parksystems (230) einfahrenden Fahrzeugs (274) und mindestens ein durch eine Einfahrtssignalerfassungseinrichtung (240) in einem Einfahrtsbereich (236) der Parkvorrichtung während des Einfahrens des Fahrzeugs (274) erfasstes Einfahrtrohsignal (498),
- mindestens ein Speichermodul (110, 210), eingerichtet zum Speichern des empfangenen Einfahrtdatensatzes (488) in einem Datenspeicher (112, 212),
- wobei das Empfangsmodul (106, 206) eingerichtet ist zum Empfangen eines Ausfahrtdatensatzes (490), enthaltend eine durch eine zweite Kennzeichenbestimmungseinrichtung (252) bestimmte Ausfahrts-Kennzeichenkette (496) eines aus der Parkvorrichtung ausfahrenden Fahrzeugs (274) und mindestens ein durch eine Ausfahrtssignalerfassungseinrichtung (242) in einem Ausfahrtsbereich (238) der Parkvorrichtung während des Ausfahrens des Fahrzeugs (274) erfasstes Ausfahrtrohsignal (492), und
- mindestens ein Auswertemodul (108, 208), eingerichtet zum Feststellen eines zu dem empfangenen Ausfahrtdatensatz (490) korrespondierenden Einfahrtdatensatzes (488) aus den gespeicherten Einfahrtdatensätzen durch:
- Vergleichen, in einem ersten Vergleichsschritt, der Ausfahrt-Kennzeichenkette (496) des Ausfahrtdatensatzes (490) mit den jeweiligen Einfahrt-Kennzeichenketten (494) der gespeicherten Einfahrtdatensätze und
- Vergleichen, in einem zweiten Vergleichsschritt, des mindestens einen Ausfahrtrohsignals (492) des Ausfahrtdatensatzes (490) mit dem Einfahrtrohsignal (498) des mindestens einen Einfahrtdatensatzes (488) der gespeicherten Einfahrtdatensätze, welcher diejenige Einfahrt-Kennzeichenkette (494) enthält, die der Ausfahrt-Kennzeichenkette (496) des Ausfahrtdatensatzes (490) am ähnlichsten ist.

2. Datenverarbeitungsvorrichtung (100, 200) nach Anspruch 1, wobei
- das Auswertemodul (108, 208) eingerichtet ist zum Durchführen des zweiten Vergleichsschritts nur dann, wenn in dem ersten Vergleichsschritt keine zur Ausfahrt-Kennzeichenkette (496) identische Einfahrt-Kennzeichenkette (494) ermittelt wurde.

3. Datenverarbeitungsvorrichtung (100, 200) nach Anspruch 1 oder 2, wobei
- das Auswertemodul (108, 208) eingerichtet ist zum Vergleichen, in dem zweiten Vergleichsschritt, des mindestens einen Ausfahrtrohsignals (492) des Ausfahrtdatensatzes (490) mit dem mindestens einen Einfahrtrohsignal (498) des Einfahrtdatensatzes (488) der gespeicherten Einfahrtdatensätze (488), welcher diejenige Einfahrt-Kennzeichenkette (494) enthält, die der Ausfahrt-Kennzeichenkette (496) des Ausfahrtdatensatzes (490) am ähnlichsten ist, ohne ein Bestimmen des Dateninhalts des mindestens einen Ausfahrtrohsignals (492) und/oder ohne ein Bestimmen des Dateninhalts des mindestens einen Einfahrtrohsignals(498) .

4. Datenverarbeitungsvorrichtung (100, 200) nach einem der vorherigen Ansprüche, wobei
- das Auswertemodul (108, 208) eingerichtet ist zum Feststellen eines zu dem empfangenen Ausfahrtdatensatz (490) korrespondierenden Einfahrtdatensatzes (488) aus den gespeicherten Einfahrtdatensätzen (488), wenn
- in dem ersten Vergleichsschritt festgestellt wird, dass die Einfahrt-Kennzeichenkette (494) des korrespondierenden Einfahrdatensatzes (488) mit der Ausfahrt-Kennzeichenkette (496) des empfangenen Ausfahrtdatensatzes (490) identisch ist,
oder
- in dem zweiten Vergleichsschritt festgestellt wird, dass das Einfahrtrohsignal (498) des korrespondierenden Einfahrtdatensatzes (488) und das Ausfahrtrohsignal (492) des empfangenen Ausfahrtdatensatzes (490) ein Übereinstimmungskriterium erfüllen.

5. Datenverarbeitungsvorrichtung (100, 200) nach einem der vorherigen Ansprüche, wobei
- das Auswertemodul (108, 208) eingerichtet ist zum Bestimmen eines Ähnlichkeitsfaktors zwischen zwei in dem ersten Vergleichsschritt verglichenen Kennzeichenketten (494, 496), basierend auf einem Messen einer Levenshtein-Distanz zwischen den verglichenen Kennzeichenketten (494, 496),
- und das Auswertemodul (108, 208) eingerichtet ist zumindest zum Bestimmen derjenigen Kennzeichenketten (494, 496), die sich am ähnlichsten sind, basierend auf den bestimmten Ähnlichkeitsfaktoren.

6. Datenverarbeitungsvorrichtung (100, 200) nach Anspruch 4 und 5, wobei
- das Auswertemodul (108, 208) eingerichtet ist zum dynamischen Bestimmen des Übereinstimmungskriteriums, basierend auf dem Ähnlichkeitsfaktor der Kennzeichenketten (494, 496), die sich am ähnlichsten sind.

7. Datenverarbeitungsvorrichtung (100, 200) nach einem der vorherigen Ansprüche, wobei
- der Einfahrtdatensatz (488) eine Mehrzahl von erfassten Einfahrtrohsignalen (498) enthält, ausgesendet durch eine entsprechende Mehrzahl von Sendevorrichtungen (276, 278, 280),
und/oder
- der Ausfahrtdatensatz (490) eine Mehrzahl von erfassten Ausfahrtrohsignalen (492) enthält, ausgesendet durch eine entsprechende Mehrzahl von Sendevorrichtungen (276, 278, 280), wobei
- eine Sendevorrichtung (276, 278, 280) ausgewählt ist aus der Gruppe, umfassend:
- mobiles Endgerät (276),
- Radsensor (278) des Fahrzeugs (274),
- Fahrzeugsteuerungsgerät des Fahrzeugs (274),
- Entertainmentsystem (280) des Fahrzeugs (274),
- Bordcomputer des Fahrzeugs (274)
- Car-2-X-Schnittstelle des Fahrzeugs.

8. Datenverarbeitungsvorrichtung (100, 200) nach einem der vorherigen Ansprüche, ferner umfassend:
- mindestens eine Nutzerdatenbank (227), eingerichtet zum Speichern von Nutzerdatensätzen, enthaltend jeweils zumindest mindestens eine Nutzerkennung, ein Fahrzeugkennzeichen und mindestens ein Datenfeld zum Speichern von Rohsignaldatensätzen,
- mindestens ein Aktualisierungsmodul (228), eingerichtet zum Hinzufügen des mindestens einen Einfahrtrohsignals (498) aus einem empfangenen Einfahrtdatensatz (488) zu demjenigen Nutzerdatensatz, dessen Fahrzeugkennzeichen mit der Einfahrt-Kennzeichenkette (494) aus dem empfangenen Einfahrtdatensatz (488) identisch ist, und/oder zum Hinzufügen des mindestens einen Ausfahrtrohsignals (492) aus einem empfangenen Ausfahrtdatensatz (490) zu demjenigen Nutzerdatensatz, dessen Fahrzeugkennzeichen mit der Ausfahrt-Kennzeichenkette (496) aus dem empfangenen Ausfahrdatensatz (490) identisch ist.

9. Datenverarbeitungsvorrichtung (100, 200) nach Anspruch 8, wobei
- das Auswertemodul (108, 208) eingerichtet ist zum Feststellen eines zu dem empfangenen Ausfahrtdatensatz (490) korrespondierenden Nutzerdatensatzes aus den gespeicherten Einfahrtdatensätzen (488) durch:
- Vergleichen, in einem dritten Vergleichsschritt, der Ausfahrt-Kennzeichenkette (496) des Ausfahrtdatensatzes (490) mit den jeweiligen Fahrzeugkennzeichen der gespeicherten Nutzerdatensätze und
- Vergleichen, in einem vierten Vergleichsschritt, des mindestens einen Ausfahrtrohsignals (492) des Ausfahrtdatensatzes (490) mit dem mindestens einen Rohsignaldatensatz des Nutzerdatensatzes der gespeicherten Nutzerdatensätze, welcher das Fahrzeugkennzeichen enthält, das der Ausfahrt-Kennzeichenkette (496) des Ausfahrtdatensatzes (496) am ähnlichsten ist, zumindest dann, wenn in dem dritten Vergleichsschritt kein zur Ausfahrt-Kennzeichenkette (496) identisches Fahrzeugkennzeichen ermittelt wurden.

10. Parksystem (230), umfassend:
- mindestens eine Datenverarbeitungsvorrichtung (100, 200) nach einem der vorherigen Ansprüche,
- mindestens eine erste Kennzeichenbestimmungseinrichtung (250), eingerichtet zum Bestimmen einer Einfahrt-Kennzeichenkette (494) eines in eine Parkvorrichtung einfahrenden Fahrzeugs (274),
- mindestens eine Einfahrtssignalerfassungseinrichtung (240), eingerichtet zum Erfassen mindestens eines Einfahrtrohsignals (498) in einem Einfahrtsbereich (236) der Parkvorrichtung während des Einfahrens des Fahrzeugs (274),
- mindestens eine zweite Kennzeichenbestimmungseinrichtung (252), eingerichtet zum Bestimmen einer Ausfahrt-Kennzeichenkette (496) eines aus der Parkvorrichtung ausfahrenden Fahrzeugs (274), und
- mindestens eine Ausfahrtssignalerfassungseinrichtung (242), eingerichtet zum Erfassen mindestens eines Ausfahrtrohsignals (492) in einem Ausfahrtsbereich (238) der Parkvorrichtung während des Ausfahrens des Fahrzeugs (274).

11. Parksystem (230) nach Anspruch 10, ferner umfassend
- mindestens eine an der Einfahrt (232) der Parkvorrichtung angeordnete Zufahrtsvorrichtung (258) mit mindestens einem Sperrmittel (262),
- wobei die Einfahrtssignalerfassungseinrichtung (240) mindestens einen ersten Empfänger (244) umfasst, eingerichtet zum Bereitstellen eines ersten Erfassungsfelds (264) in einer Durchfahrtsrichtung vor dem Sperrmittel, und mindestens einen zweiten Empfänger umfasst, eingerichtet zum Bereitstellen eines zweiten Erfassungsfelds (266) in Durchfahrtsrichtung hinter dem Sperrmittel.

12. Parksystem (230) nach Anspruch 11, umfassend:
ein Datensatzvereinheitlichungsmodul (107, 207) eingerichtet
- zum Empfangen der durch die erste Kennzeichenbestimmungseinrichtung (250) bestimmten Einfahrts-Kennzeichenkette eines in eine Parkvorrichtung des Parksystems (230) einfahrenden Fahrzeugs (274) und
- zum Empfangen des mindestens einen durch den ersten Empfänger (244) in einem ersten Erfassungsfeld (264) während des Einfahrens des Fahrzeugs (274) vor dem Sperrmittel erfassten ersten Einfahrtrohsignals, und
- zum Empfangen mindestens eines durch den zweiten Empfänger (246) in einem zweiten Erfassungsfeld (266) während des Einfahrens des Fahrzeugs (274) hinter dem Sperrmittel erfassten zweiten Einfahrtrohsignals,
- zum Generieren des Einfahrtdatensatzes (488), enthaltend als Einfahrt-Kennzeichenkette (494) die Einfahrts-Kennzeichenkette des ersten Einfahrtdatensatzes und als Einfahrtrohsignal (498) die Schnittmenge des mindestens einen erfassten ersten Einfahrtrohsignals und des mindestens einen erfassten zweiten Einfahrtrohsignals.

13. Parksystem (230) nach Anspruch 10, ferner umfassend
- mindestens eine an der Einfahrt (232) der Parkvorrichtung angeordnete Zufahrtsvorrichtung (258) ohne Sperrmittel,
- wobei die Einfahrtssignalerfassungseinrichtung (240) mindestens einen Empfänger umfasst, eingerichtet zum Bereitstellen eines dritten Erfassungsfelds (264),
- wobei die erste Kennzeichenbestimmungseinrichtung (250) mindestens eine an der Einfahrt angeordnete Kamera (254) umfasst,
- wobei sich ein Erfassungsbereich der Kamera (254) und das dritte Erfassungsfeld (264) zumindest teilweise überlappen.

14. Verfahren, insbesondere computerimplementiertes Verfahren, umfassend:
- Empfangen, durch ein Empfangsmodul einer Datenverarbeitungsvorrichtung (100, 200) eines Parksystems (230), eines Einfahrtdatensatzes (488), enthaltend eine durch eine erste Kennzeichenbestimmungseinrichtung (250) bestimmte Einfahrts-Kennzeichenkette (494) eines in eine Parkvorrichtung einfahrenden Fahrzeugs (274) und mindestens ein durch eine Einfahrtssignalerfassungseinrichtung (240) in einem Einfahrtsbereich (236) der Parkvorrichtung während des Einfahrens des Fahrzeugs (274) erfasstes Einfahrtrohsignal (494),
- Speichern, durch mindestens ein Speichermodul (110, 210) der Datenverarbeitungsvorrichtung (100, 200), des empfangenen Einfahrtdatensatzes (488) in einem Datenspeicher (112, 212),
- Empfangen, durch das Empfangsmodul (106, 206), eines Ausfahrtdatensatzes (490), enthaltend eine durch eine zweite Kennzeichenbestimmungseinrichtung (252) bestimmte Ausfahrts-Kennzeichenkette (496) eines aus der Parkvorrichtung ausfahrenden Fahrzeugs (274) und mindestens ein durch eine Ausfahrtssignalerfassungseinrichtung (242) in einem Ausfahrtsbereich (238) der Parkvorrichtung während des Ausfahrens des Fahrzeugs (274) erfasstes Ausfahrtrohsignal (492),
- Feststellen, durch mindestens ein Auswertemodul (108, 208) der Datenverarbeitungsvorrichtung (100, 200), eines zu dem empfangenen Ausfahrtdatensatz (490) korrespondierenden Einfahrtdatensatzes (488) aus den gespeicherten Einfahrtdatensätzen durch:
- Vergleichen, in einem ersten Vergleichsschritt, der Ausfahrt-Kennzeichenkette (496) des Ausfahrtdatensatzes (490) mit den jeweiligen Einfahrt-Kennzeichenketten (494) der gespeicherten Einfahrtdatensätze und/ oder
- Vergleichen, in einem zweiten Vergleichsschritt, des mindestens einen Ausfahrtrohsignals (492) des Ausfahrtdatensatzes (490) mit dem Einfahrtrohsignal (498) des mindestens einen Einfahrtdatensatzes (488) der gespeicherten Einfahrtdatensätze, welcher diejenige Einfahrt-Kennzeichenkette (494) enthält, die der Ausfahrt-Kennzeichenkette (496) des Ausfahrtdatensatzes (490) am ähnlichsten ist.

15. Computerprogramm, umfassend Befehle, die bei der Ausführung des Computerprogramms durch mindestens einen Prozessor (102, 202) einer Datenverarbeitungsvorrichtung (100, 200) diesen veranlassen, das Verfahren nach Anspruch 14 auszuführen und/oder zu steuern.
